# EUROPEAN PATENT APPLICATION

(11) **EP 4 708 835 A2**
(43) Date of publication of application: **11.03.2026**
(21) Application number: 25218251.4
(22) Date of filing: 26.12.2022
(51) Int. Cl.: H04M 1/725

(54) **AUDIO PROCESSING METHOD AND ELECTRONIC DEVICE**

(30) Priority: 28.02.2022 CN 202210191577
(62) Divisional of application: 22928447.6
(71) Applicant: Honor Device Co., Ltd., Shenzhen, Guangdong 518040 (CN)
(72) Inventor: CHEN, Jiazi, Shenzhen, 518040 (CN); GE, Feng, Shenzhen, 518040 (CN); ZHANG, Zhuohua, Shenzhen, 518040 (CN)
(74) Representative: Thun, Clemens

(57) **Abstract**

This application relates to the technical field of electronic devices, and provides an audio processing method and an electronic device. When an operation by a user to lower a volume or increase a volume is received, if it is determined that an adjusted volume level is less than or equal to a preset volume level, a private call mode is enabled. For example, sound production may be simultaneously performed through a screen and a receiver, and the two sound production manners may be controlled to produce sounds at different volume intensity (for example, intensity of sounds produced through the screen is greater than or equal to intensity of sounds produced through the receiver), to avoid sound leakage, protect call privacy of the user, and improve call experience of the user. If it is determined that the adjusted volume level is greater than the preset volume level, a high volume mode is enabled. For example, sound production may be simultaneously performed through the screen and the receiver, and the two sound production manners may be controlled to produce sounds at different volume intensity (for example, intensity of sounds produced through the receiver is greater than intensity of sounds produced through the screen), to ensure a good voice output effect and improve call experience of the user.

## Description

This application claims priority to Chinese Patent Application No. 202210191577.X, filed with the China National Intellectual Property Administration on February 28, 2022 and entitled "AUDIO PROCESSING METHOD AND ELECTRONIC DEVICE", which is incorporated herein by reference in its entirety.

### TECHNICAL FIELD

This application relates to the technical field of electronic devices, and in particular, to an audio processing method and an electronic device.

### BACKGROUND

Currently, most mobile phones use receivers arranged at tops of the mobile phones to produce sounds during voice communication of the mobile phones. Generally, a sound output hole needs to be correspondingly arranged at a location of the receiver of the mobile phone, to release energy generated when the receiver produces sounds. The sound output hole is usually arranged on a front panel of the mobile phone. With development of large-screen and full-screen mobile phones, sound output holes of some full-screen mobile phones are designed in a long slot form, and are at locations at which middle frames of the mobile phones are connected to front panels of the mobile phones. In addition, to ensure that a sound output area is large enough to have a good voice output effect, openings are further added to tops of middle frames of some full-screen mobile phones as sound output holes.

However, when a user holds the mobile phone and listens to voice (such as a voice call scenario), the voice outputted through the receiver is emitted not only from a sound output hole at a side slot, and a large part of energy is emitted from a sound output hole at the top. Therefore, sounds emitted from the sound output holes can not only be heard by the user, but also can be heard by another user in a quiet environment. Consequently, sound leakage is caused, and user privacy leakage is prone to occur.

### SUMMARY

This application provides an audio processing method and an electronic device, so as to resolve a problem of sound leakage during voice playback through a receiver in a scenario where a user holds a mobile phone close to an ear to listen to the voice.

To achieve the foregoing objective, the following technical solutions are used in this application.

According to a first aspect, this application provides an audio processing method, applied to an electronic device, where the electronic device includes a receiver, a screen, and a screen sound production apparatus, the screen sound production apparatus is configured to drive the screen to produce sounds, and the method includes:
receiving a first operation performed by a user, where the first operation is used for triggering making a call or answering a call;
entering, by the electronic device in response to the first operation, a voice call state, and outputting voice based on a first output policy corresponding to a private call mode, where the first output policy is to output voice through the screen;
receiving a second operation performed by the user, where the second operation is used for triggering an increase in an output volume of the electronic device; and
in response to the second operation, switching from the private call mode to a high volume mode when an adjusted output volume is greater than a preset output volume, and outputting voice based on a second output policy corresponding to the high volume mode, where the second output policy is to output voice through the receiver.

Through the audio processing method provided in this embodiment of this application, when the electronic device enters the voice call state, the private call mode is automatically enabled. For example, the voice may be outputted through the screen sound to avoid a sound leakage, protect call privacy of the user, and improve call experience of the user. When an operation performed by the user to increase the volume is received, if it is determined that the adjusted volume level is greater than the preset volume level, the high volume mode is enabled. For example, the voice may be outputted through the receiver to ensure a good voice output effect and improve call experience of the user.

In some possible implementations, the first output policy is to output voice through the screen and the receiver, where when the voice is outputted through the screen and the receiver in the private call mode, volume intensity of sounds produced through the screen is greater than or equal to volume intensity of sounds produced through the receiver.

Through the above solution, in the private call mode, sound production may be simultaneously performed through a screen and a receiver, and the two sound production manners may be controlled to produce sounds at different volume intensity, for example, intensity of sounds produced through the screen is greater than or equal to intensity of sounds produced through the receiver, to avoid sound leakage, protect call privacy of the user, and improve call experience of the user.

In some possible implementations, the second output policy is to output voice through the receiver and the screen. When voice is outputted through the screen and the receiver in the private call mode, volume intensity of sounds produced through the screen is greater than or equal to volume intensity of sounds produced through the receiver.

Through the above solution, in the high volume mode, sound production may be simultaneously performed through the screen and the receiver, and the two sound production manners may be controlled to produce sounds at different volume intensity, for example, intensity of sounds produced through the receiver is greater than intensity of sounds produced through the screen, to ensure a good voice output effect and improve call experience of the user.

In some possible implementations, total output volume intensity in the private call mode is equal to total output volume intensity in the high volume mode.

In some possible implementations, the method may further include: increasing the total output volume intensity of the electronic device when the private call mode is switched to the high volume mode.

In some possible implementations, after the outputting voice based on a second output policy corresponding to the high volume mode, the method may further include:
receiving a third operation performed by the user, where the third operation is used for triggering a decrease in the output volume of the electronic device; and
in response to the third operation, switching from the high volume mode to the private call mode when an adjusted output volume is less than or equal to the preset output volume, and outputting voice based on the first output policy corresponding to the private call mode.

Through the above solution, when receiving an operation performed by a user to lower a volume, if it is determined that an adjusted volume level is less than or equal to a preset volume level, a private call mode is enabled, to avoid a sound leakage, protect call privacy of the user, and improve call experience of the user.

In some possible implementations, the outputting voice based on a first output policy corresponding to a private call mode includes:
outputting voice based on the first output policy corresponding to the private call mode when the electronic device enables a smart privacy call function.

In some possible implementations, the output volume of the electronic device is represented by a volume level, and a preset volume is represented by using a preset volume level; or the output volume of the electronic device is represented by using a volume decibel value, and a preset volume is represented by using a preset volume decibel value.

In some possible implementations, an output volume range of the electronic device includes a preset volume decibel value range, the preset volume decibel value range is divided into N levels, and N volume levels are in a one-to-one correspondence with N decibel values in the preset volume decibel value range.

In some possible implementations, the N volume levels include a volume level 1 to a volume level 10, where the private call mode corresponds to the volume level 1 to a volume level I, and the high volume mode corresponds to a volume level I+1 to the volume level 10, I being an integer greater than 1 and less than 10.

In some possible implementations, the preset volume decibel value range is [2.5 dB, 25 dB].

In some possible implementations, when a value of I is 6, the preset volume level is a volume level 6, and a volume decibel value corresponding to the volume level 6 is 15 dB.

In some possible implementations, the method may further include:
displaying first prompt information and/or second prompt information in a first region of a voice call interface after the smart privacy call function is enabled, where the first prompt information is used for prompting that the private call function is enabled, and the first prompt information is used for guiding the user to approach the first region to answer a call.

The first region is a region of the screen closest to the screen sound production apparatus.

In some possible implementations, the displaying first prompt information and/or second prompt information in a first region of a voice call interface includes: alternately displaying the first prompt information and the second prompt information in the first region of the voice call interface.

In some possible implementations, the method further includes: canceling the display of the first prompt information and the second prompt information when the private call mode is switched to the high volume mode.

In some possible implementations, the method further includes:
displaying third prompt information in a voice call interface of first M voice calls after the smart privacy call function is enabled, where the third prompt information is used for representing an effect after the smart privacy call function is enabled; and
canceling the display of the third prompt information in a voice call interface of a subsequent voice call.

In some possible implementations, the method may further include: displaying an icon for identifying the private call mode in a status bar of the electronic device when voice is outputted based on the first output policy corresponding to the private call mode.

In some possible implementations, the method may further include: canceling the display of the icon for identifying the private call mode in the status bar of the electronic device when the private call mode is switched to the high volume mode.

In some possible implementations, the method may further include:
receiving a fourth operation performed by the user on a physical volume button of the electronic device; and
displaying a volume bar icon and a call mode icon in the voice call interface in response to the fourth operation, where
the volume bar icon is used for representing an output volume during a voice call, and the call mode icon is used for representing that a current call mode is the private call mode or the high volume mode.

In some possible implementations, when the smart privacy call function is enabled, the call mode icon is an icon used for representing the private call mode, or when the smart privacy call function is disabled, the call mode icon is an icon used for representing the high volume mode.

In some possible implementations, the electronic device may further include a loudspeaker, and the method may further include:
receiving, when the smart privacy call function is enabled, a fifth operation performed by the user on a loudspeaker control in the voice call interface; and
in response to the fifth operation, outputting voice through the loudspeaker and stopping sound production of the receiver and sound production of the screen.

In some possible implementations, the method may further include:
displaying a system setting interface when receiving an operation performed by the user on a system setting icon, where the system setting interface includes a private call setting item;
displaying a setting interface of a smart privacy call function when receiving an operation performed by the user on the private call setting item, where the setting interface displays an enable control and a disable control of the smart privacy call function; and
enabling the smart privacy call function when receiving an operation performed by the user on the enable control; or disabling the smart privacy call function when receiving an operation performed by the user on the disable control.

In some possible implementations, the method may further include:
receiving, when a smart privacy call function is enabled, a sixth operation performed by the user on a voice call interface; and
jumping from the voice call interface to a card notification interface in response to the sixth operation, where a first notification card is displayed in the card notification interface, and the first notification card is used for prompting that the smart privacy call function is enabled.

In some possible implementations, the method may further include: jumping from the notification interface to a setting interface of the smart privacy call function when receiving an operation performed by the user on the first notification card.

In some possible implementations, the method is applicable to a call scenario of voice over Internet protocol.

According to a second aspect, this application provides an audio processing apparatus, including units configured to perform the method according to the first aspect. The apparatus may correspondingly perform the method described in the first aspect. For relevant description of the units in the apparatus, reference may be made to the description of the first aspect. For brevity, details are not described herein again.

The method according to the first aspect may be implemented by hardware or may be implemented by hardware executing corresponding software. The hardware or the software includes one or more modules or units corresponding to the function, for example, a processing module or unit and a display module or unit.

According to a third aspect, this application provides an electronic device. The electronic device includes a processor, where the processor is coupled to a memory, the memory is configured to store a computer program or instructions, and the processor is configured to execute the computer program or the instructions stored in the memory, to cause the method according to the first aspect to be performed.

For example, the processor is configured to execute the computer program or the instruction stored in the memory to enable the apparatus to perform the method according to the first aspect.

According to a fourth aspect, this application provides a computer-readable storage medium. The computer-readable storage medium stores a computer program (which may also be referred to as an instruction or code) for implementing the method according to the first aspect.

For example, when the computer program is executed by a computer, the computer is enabled to perform the method according to the first aspect.

According to a fifth aspect, this application provides a chip, including a processor. The processor is configured to read and execute a computer program stored in a memory, to perform the method according to the first aspect and any possible implementation of the first aspect.

Optionally, the chip further includes the memory, where the memory is connected to the processor through a circuit or a wire.

According to a sixth aspect, this application provides a system-on-chip, including a processor. The processor is configured to read and execute a computer program stored in a memory, to perform the method according to the first aspect and any possible implementation of the first aspect.

Optionally, the system-on-chip further includes the memory, where the memory is connected to the processor through a circuit or a wire.

According to a seventh aspect, this application provides a computer program product. The computer program product includes a computer program (also referred to as an instruction or a code), and when the computer program is executed by an electronic device, the electronic device is enabled to implement the method according to the first aspect.

It may be understood that, for beneficial effects of the second aspect to the seventh aspect, reference may be made to the relevant description in the first aspect, and details are not described herein again.

### BRIEF DESCRIPTION OF DRAWINGS

FIG. 1 is a schematic structural diagram of an electronic device arranged with a receiver and a sound output hole;
FIG. 2 is a schematic structural diagram of an electronic device arranged with a receiver and a screen vibration apparatus according to an embodiment of this application;
FIG. 3 is a schematic structural diagram of an electronic device according to an embodiment of this application;
FIG. 4A and FIG. 4B are a first schematic diagram of an interface of an audio processing method applied to an electronic device according to an embodiment of this application;
FIG. 5A and FIG. 5B are a second schematic diagram of an interface of an audio processing method applied to an electronic device according to an embodiment of this application;
FIG. 6A and FIG. 6B are a third schematic diagram of an interface of an audio processing method applied to an electronic device according to an embodiment of this application;
FIG. 7 is a fourth schematic diagram of an interface of an audio processing method applied to an electronic device according to an embodiment of this application;
FIG. 8 is a schematic diagram of a change of a volume bar during mode switching in an audio processing method according to an embodiment of this application;
FIG. 9A to FIG. 9D are a fifth schematic diagram of an interface of an audio processing method applied to an electronic device according to an embodiment of this application;
FIG. 10A to FIG. 10D are a sixth schematic diagram of an interface of an audio processing method applied to an electronic device according to an embodiment of this application;
FIG. 11 is a schematic diagram of division of volume levels applied by an audio processing method according to an embodiment of this application;
FIG. 12 is another schematic diagram of division of volume levels applied by an audio processing method according to an embodiment of this application;
FIG. 13 is a first schematic diagram of a change of a volume bar during mode switching in an audio processing method according to an embodiment of this application;
FIG. 14 is a second schematic diagram of a change of a volume bar during mode switching in an audio processing method according to an embodiment of this application;
FIG. 15 is a third schematic diagram of a change of a volume bar during mode switching in an audio processing method according to an embodiment of this application;
FIG. 16A to FIG. 16D are a seventh schematic diagram of an interface of an audio processing method applied to an electronic device according to an embodiment of this application;
FIG. 17A to FIG. 17C are an eighth schematic diagram of an interface of an audio processing method applied to an electronic device according to an embodiment of this application;
FIG. 18A to FIG. 18D are a ninth schematic diagram of an interface of an audio processing method applied to an electronic device according to an embodiment of this application;
FIG. 19A and FIG. 19B are a tenth schematic diagram of an interface of an audio processing method applied to an electronic device according to an embodiment of this application;
FIG. 20A and FIG. 20B are an eleventh schematic diagram of an interface of an audio processing method applied to an electronic device according to an embodiment of this application; and
FIG. 21 is a schematic structural diagram of an audio processing apparatus according to an embodiment of this application.

### DESCRIPTION OF EMBODIMENTS

To make objectives, technical solutions, and advantages of embodiments of this application clearer, the technical solutions in embodiments of this application will be clearly and completely described below with reference to the accompanying drawings. Apparently, the embodiments to be described are some rather than all of embodiments of this application. All other embodiments obtained by a person of ordinary skill in the art based on embodiments of this application without creative efforts shall fall within the protection scope of this application.

Currently, most mobile phones use receivers arranged at tops of the mobile phones to produce sounds during voice communication of the mobile phones. Generally, a sound output hole needs to be correspondingly arranged at a location of the receiver of the mobile phone, to release energy generated when the receiver produces sounds. The sound output hole is usually arranged on a front panel of the mobile phone. However, with continuous development of the mobile phone, to provide a user with better screen viewing experience, a screen-to-body ratio of a screen of the mobile phone is increasingly high. Because the sound output hole arranged on the front panel occupies a partial region of the front panel of the mobile phone, a width of a frame of the mobile phone is increased. This affects a further increase in the screen-to-body ratio of the screen of the mobile phone.

Therefore, with development of large-screen and full-screen mobile phones, to reduce an area occupied on the front panel of the mobile phone by the sound output hole of the receiver (also referred to as a telephone receiver) used to produce sounds during a call in voice communication, to further increase the screen-to-body ratio of the screen, sound output holes of some full-screen mobile phones are designed in a long slot form, and are at locations at which middle frames of the mobile phones are connected to front panels of the mobile phones. In addition, to ensure that a sound output area is large enough to have a good voice output effect, openings are further added to tops of middle frames of some full-screen mobile phones as sound output holes.

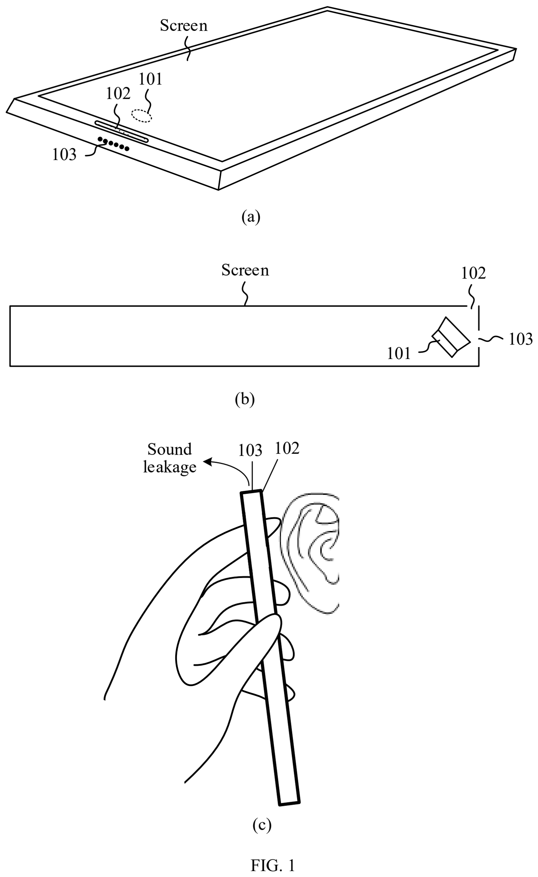

For example, FIG. 1 shows a schematic structural diagram of a mobile phone. As shown in FIG. 1, the mobile phone may include a front panel (usually including a screen and a border frame) configured to arrange the screen, and a rear panel and a middle frame that are configured to support an internal circuit. The front panel, the rear panel, and the middle frame can form a housing structure through enclosure. As shown in (a) in FIG. 1, a receiver 101 (that is, a loudspeaker configured to produce sounds during a call in voice communication, which is also referred to as a telephone receiver) is arranged at a top location in the housing structure (that is, a top location of the mobile phone). Corresponding to the receiver 101, the mobile phone includes two sound output holes (for example, a sound output hole 102 and a sound output hole 103). With reference to (b) in FIG. 1, (b) in FIG. 1 is a cross-sectional view of a structure of a mobile phone. The sound output hole 102 is at a location at which the front panel and the middle frame of the mobile phone are connected (that is, at a location of a side slot). The sound output hole 103 is at a location that is on the middle frame of the mobile phone and that is relatively close to the receiver 101 (that is, at a top location of the middle frame of the mobile phone).

However, for the sound output hole arranged in this manner, when a user normally uses the mobile phone to perform voice communication, an auricle of the user cannot completely cover the sound output hole. As a result, sound leakage occurs when sound energy of a loudspeaker comes out from the sound output hole arranged at the top of the middle frame of the mobile phone. (c) in FIG. 1 shows a schematic diagram of a scenario in which a user performs voice communication through a mobile phone. As shown in (c) in FIG. 1, when the user holds the mobile phone for voice communication through the receiver, the receiver of the mobile phone is close to an ear (or an auricle) of the user. Because the sound output hole of the receiver of the mobile phone (such as the sound output hole 102 in the side slot of the mobile phone and the sound output hole 103 at the top of the middle frame) cannot be completely covered by the ear of the user, sounds outputted from the sound output holes not only can be heard by the user, but also can be heard by another user in a quiet environment.

To resolve the above problems, this embodiment of this application provides an audio processing method. The method may be applied to an electronic device having a voice communication function. For example, the audio processing method may be applied to a scenario in which a user uses the electronic device to be close to an ear for voice listening, for example, the user performs voice communication by using the receiver or listens to a voice message in an instant messaging application by using the receiver. The electronic device may include a display (also referred to as a screen), a screen sound production apparatus (that is, an apparatus that can produce sounds through screen vibration), a receiver (that is, the loudspeaker configured to produce sounds during a call in voice communication, which is also referred to as a telephone receiver), and a sound output hole arranged corresponding to the receiver.

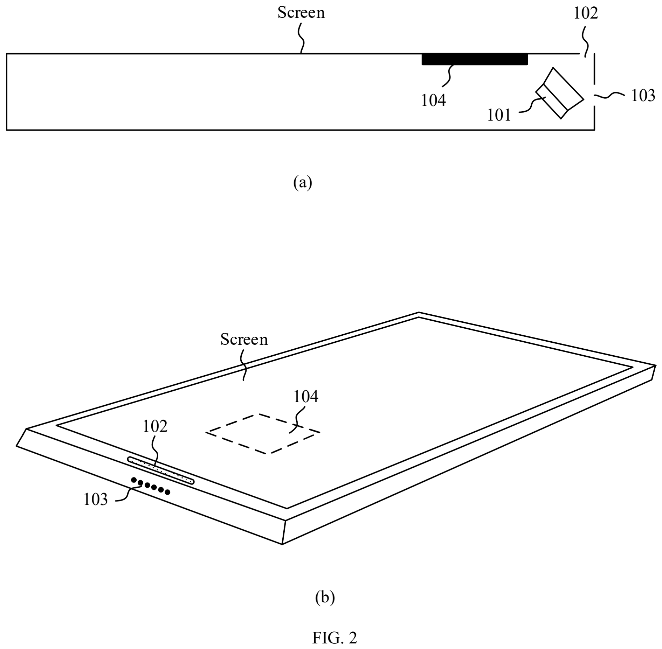

For example, FIG. 2 is a schematic structural diagram of an electronic device according to an embodiment of this application. As shown in (a) and (b) in FIG. 2, in addition to the receiver 101, the sound output hole 102, and the sound output hole 103 shown in FIG. 1, the electronic device further includes a screen sound production apparatus 104 connected to the screen. For example, the screen sound production apparatus 104 is a vibration source (also referred to as an exciter) connected to the screen. The exciter causes the screen to vibrate, to produce sounds through the screen. The screen sound production apparatus 104 is arranged in the housing structure of the electronic device.

It should be noted that in this embodiment of this application, a voice output mode (also referred to as a listening mode) of the electronic device may include a privacy mode (privacy mode, PVM), a high volume mode, and a loudspeaker mode. The privacy mode may also be referred to as a private call mode.

In some embodiments, after the electronic device enables the private call mode, the electronic device may output voice by combining a screen sound production manner and a receiver sound production manner. Voice output intensity (for example, 70%) corresponding to the screen sound production manner is greater than or equal to voice output intensity (for example, 30%) corresponding to the receiver sound production manner. In other words, the mobile phone may use the screen sound production as a main manner and the receiver sound production as an auxiliary manner to simultaneously play voice. In the private call mode, sounds may also be produced only through the screen.

In some embodiments, after the electronic device enables the high volume mode, the electronic device may output voice by combining the receiver sound production manner and the screen sound production manner. The voice output intensity (for example, 70%) corresponding to the receiver sound production manner is greater than or equal to the voice output intensity (for example, 30%) corresponding to the screen sound production manner. In other words, the mobile phone may use the receiver sound production as a main manner and the screen sound production as an auxiliary manner to simultaneously play voice.

In some embodiments, when the private call mode is switched to the high volume mode, an overall sound volume (or referred to as loudness or intensity) may also be increased based on a volume corresponding to the private call mode to improve a voice playback effect. In other words, overall sound loudness of sounds produced through the receiver and the screen in the high volume mode is greater than overall sound loudness of sounds produced through the receiver and the screen in the private call mode.

Compared with the receiver sound production manner, the screen sound production manner can effectively prevent sound leakage during a voice call. Therefore, when the user makes and answers a call in a quiet environment, the user usually intends to reduce the sound leakage. In this case, the private call mode may be used, to ensure that the call is clear and the sound leakage is reduced, thereby achieving an effect of protecting user privacy.

In some other embodiments, after the electronic device enables the private call mode, the electronic device may also output voice only by using the screen sound production manner. It may be understood that the receiver does not produce sounds in this case.

In some other embodiments, after the electronic device enables the high volume mode, the electronic device may also output voice only by using the receiver sound production manner. It may be understood that the screen does not produce sounds in this case.

In some embodiments, after the electronic device enables the loudspeaker mode, the electronic device outputs voice through the loudspeaker (also referred to as a horn). It may be understood that neither the receiver nor the screen produces sounds in this case.

Optionally, in response to an operation performed by the user on the electronic device, a voice output manner may be controlled to switch between the private call mode, the high volume mode, and the loudspeaker mode. A specific condition for triggering switching and a switching process are described in detail below.

With reference to the accompanying drawings, the following describes an electronic device to which the audio processing method provided in this embodiment of this application is applied.

For example, the electronic device in this embodiment of this application may be a device that has a voice communication function, such as a mobile phone, a tablet computer, an ultra-mobile personal computer (ultra-mobile personal computer, UMPC), a netbook, a cellular phone, a personal digital assistant (personal digital assistant, PDA), or a wearable device (such as a smartwatch or a smart band). A specific form of the electronic device is not specifically limited in this embodiment of this application.

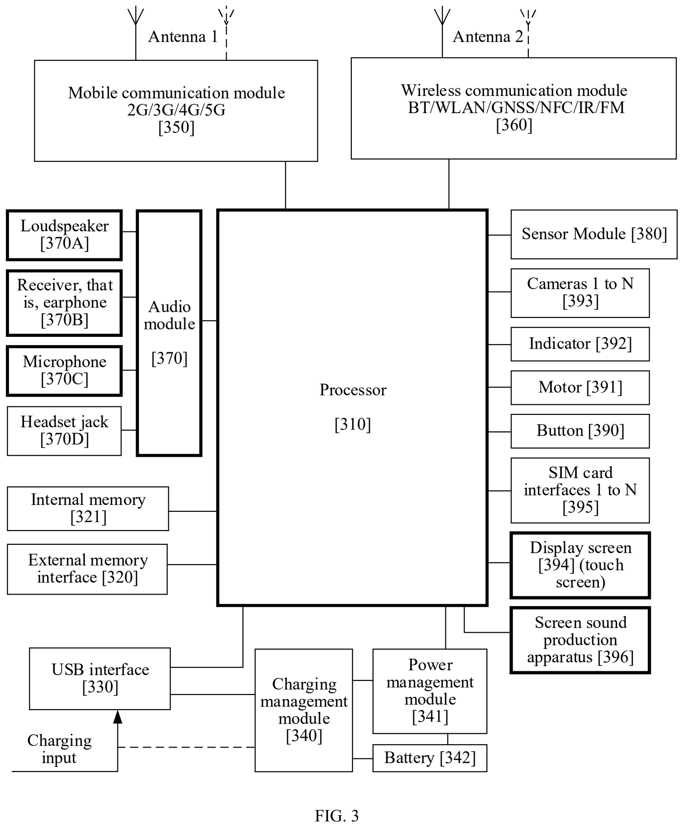

For example, the electronic device is a mobile phone. FIG. 3 is a schematic structural diagram of another electronic device according to an embodiment of this application. In other words, for example, the electronic device shown in FIG. 3 may be a mobile phone.

As shown in FIG. 3, the mobile phone may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a loudspeaker 370A, a telephone receiver (that is, earphone) 370B, a microphone 370C, a headset jack 370D, a sensor module 380, a button 390, a motor 391, an indicator 392, a camera 393, a display 394, a subscriber identity module (subscriber identification module, SIM) card interface 395, a screen sound production apparatus 396, and the like.

The sensor module may include sensors such as a pressure sensor, a gyroscope sensor, a barometric pressure sensor, a magnetic sensor, an acceleration sensor, a distance sensor, an optical proximity sensor, a fingerprint sensor, a temperature sensor, and a touch sensor, an ambient light sensor, a bone conduction sensor, and the like. In this embodiment of this application, the electronic device may detect, by using a sensor such as the optical proximity sensor (that is, a light sensor) or the distance sensor, whether an ear of the user is close to the receiver. For example, the electronic device may detect, by using the distance sensor, whether there is an obstruction in front of a front panel (or a screen) of the mobile phone, and detect a distance between the obstruction and the screen, to determine whether the ear of the user is currently close to the receiver.

It may be understood that the structure illustrated in this embodiment does not constitute a specific limitation on the mobile phone. In some other embodiments, the mobile phone may include more or fewer components than those shown in the figure, or some components may be combined, or some components may be split, or components are arranged in different manners. The components in the portrait may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated into one or more processors.

The controller may be a neural center and command center of the mobile phone. The controller may generate an operation control signal based on an instruction operation code and a time sequence signal, to complete control of instruction fetching and instruction execution.

A memory may also be arranged in the processor 310, and is configured to store instructions and data. In some embodiments, the memory in processor 310 is a cache memory. The memory may store an instruction or data that is recently used or cyclically used by the processor 310. If the processor 310 needs to use the instruction or the data again, the processor may directly invoke the instruction or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment is merely an example for description and does not constitute a limitation on the structure of the mobile phone. In some other embodiments, the mobile phone may alternatively use an interface connection manner different from that in the foregoing embodiment, or use a combination of a plurality of interface connection manners.

In this embodiment of this application, the electronic device may determine, by using the processor 310, a category of a listening environment in which the electronic device is currently located; and then separately adjust, based on the category, a frequency band in which the receiver produces sounds and a frequency band in which the screen produces sounds, to control the receiver and the screen to produce sounds to respectively play sounds in corresponding frequency bands in a sound signal, so as to avoid sound leakage of the electronic device when a human ear listens to a sound in a quiet environment.

The charging management module 340 is configured to receive a charging input from a charger (such as a wireless charger or a wired charger) to charge the battery 342. The power management module 341 is configured to be connected to the battery 342, the charging management module 340, and the processor 310. The power management module 341 receives an input of the battery 342 and/or an input of the charging management module 340, to supply power to the components in the electronic device.

A wireless communication function of the mobile phone may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may further be multiplexed to improve utilization of the antennas. For example, the antenna 1 may be multiplexed into a diversity antenna of a wireless local area network. In some other embodiments, the antennas may be used with a tuning switch.

In some embodiments, in the mobile phone, the antenna 1 is coupled to the mobile communication module 350, and the antenna 2 is coupled to the wireless communication module 360, so that the mobile phone may communicate with a network and another device by using a wireless communication technology. The mobile communication module 350 may provide a solution for wireless communication including 2G/3G/4G/5G and the like to be applied to the mobile phone. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering and amplification on the received electromagnetic wave, and transmit the electromagnetic wave to the modem processor for demodulation.

The mobile communication module 350 may further amplify a signal modulated by the modem processor, and convert the signal into an electromagnetic wave by using the antenna 1 for radiation. In some embodiments, at least some of functional modules of the mobile communication module 350 may be arranged in the processor 310. In some embodiments, at least some of the functional modules of the mobile communication module 350 may be arranged in a same component as at least some of modules of the processor 310.

The wireless communication module 360 may provide a solution for wireless communication including a wireless local area network (wireless local area networks, WLAN) (such as a wireless fidelity (wireless fidelity, Wi-Fi) network), Bluetooth (blue tooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the mobile phone.

The wireless communication module 360 may be one or more components that integrate at least one communication processing module. The wireless communication module 360 receives an electromagnetic wave through the antenna 2, performs frequency modulation and filtering processing on the electromagnetic wave signal, and sends the processed signal to the processor 310. The wireless communication module 360 may also receive a to-be-sent signal from the processor 310, perform frequency modulation and amplification on the to-be-sent signal, and convert the signal into an electromagnetic wave for radiation through the antenna 2.

Certainly, the wireless communication module 360 may also support the mobile phone in performing voice communication. For example, the mobile phone may access a Wi-Fi network by using the wireless communication module 360, and then interact with another device by using any application program that can provide a voice communication service, to provide a user with the voice communication service. For example, the application program that can provide the voice communication service may be an instant messaging application.

The mobile phone implements a display function by using the GPU, the display 394, the application processor, and the like. The GPU is a microprocessor for image processing and connects the display 394 and the application processor. The GPU is configured to perform mathematical and geometric calculations, and is configured to render graphics. The processor 310 may include one or more GPUs and execute program instructions to generate or change display information. The display 394 is configured to display an image, a video, or the like.

The mobile phone may implement a photographing function by using the ISP, the camera 393, the video codec, the GPU, the display 394, the application processor, and the like. The ISP is configured to process data fed back by the camera 393. In some embodiments, the ISP may be arranged in the camera 393. The camera 393 is configured to capture a still image or video. In some embodiments, the mobile phone may include 1 or N cameras 393, where N is a positive integer greater than 1.

The external memory interface 320 may be configured to connect to an external storage card such as a micro SD card, to extend a storage capability of the mobile phone. The internal memory 321 may be configured to store computer executable program code. The executable program code includes instructions. The processor 310 runs the instructions stored in the internal memory 321, to perform various function applications and data processing of the mobile phone. For example, in this embodiment of this application, the processor 310 may perform the instructions stored in the internal memory 321, and the internal memory 321 may include a program storage area and a data storage area.

The mobile phone may implement an audio function by using the audio module 370, the loudspeaker 370A, the telephone receiver (that is, the receiver) 370B, the microphone 370C, the headset interface 370D, the application processor, and the like. The audio function includes, for example, music playing and sound recording.

The audio module 370 is configured to convert digital audio signal into an analog audio signal output, and is further configured to convert an analog audio input into a digital audio signal. The audio module 370 may further be configured to code and decode the audio signal. In some embodiments, the audio module 370 may be arranged in the processor 310, or some function modules in the audio module 370 are arranged in the processor 310. The loudspeaker 370A, also referred to as a "horn", is configured to convert an electrical audio signal into a sound signal. The telephone receiver 370B, also referred to as a "receiver", is configured to convert an audio electrical signal into a sound signal. The microphone 370C, also referred to as a "voice tube" or a "mike", is configured to convert a sound signal into an electrical signal. The headset jack 370D is configured to be connected to a wired headset. The headset jack 370D may be a USB interface 330, or may be a 3.5 mm open mobile electronic device platform (open mobile terminal platform, OMTP) standard interface or cellular telecommunications industry association of the USA (cellular telecommunications industry association of the USA, CTIA) standard interface.

The telephone receiver 370B (that is, the "receiver") may be the receiver 101 shown in FIG. 1.

For example, in this embodiment of this application, the audio module 370 may convert audio electrical signals received by the mobile communication module 350 and the wireless communication module 360 into sound signals. The telephone receiver (that is, the "receiver") 370B of the audio module 370 plays the sound signal, and the screen sound production apparatus 396 drives the screen (that is, the display) to perform screen sound production to play the sound signal.

For example, in this embodiment of this application, the electronic device may detect, by using the microphone 370C, intensity of sounds produced through an ambient sound in an environment in which the electronic device is currently located, so that the processor 310 determines, based on the detected intensity of sounds produced through the ambient sound, the category of the listening environment in which the electronic device is currently located.

The button 390 includes a power button, a volume button, and the like. The motor 391 may generate a vibration prompt. The indicator 392 may be an indicator light, and may be configured to indicate a charging state or a battery change, or may be further configured to indicate a message, a missed call, a notification, or the like. The SIM card interface 395 is configured to connect a SIM card. The mobile phone may support 1 or N SIM card interfaces, where N is a positive integer greater than 1.

Certainly, it may be understood that FIG. 3 is merely an example for description when a device form of the electronic device is a mobile phone. If the electronic device is in another device form such as a tablet computer, a handheld computer, a PDA, or a wearable device (for example, a smart watch or a smart bracelet), the structure of the electronic device may include fewer structures than those shown in FIG. 3 or may include more structures than those shown in FIG. 3. This is not limited herein.

In this embodiment of this application, the electronic device includes a hardware layer, an operating system layer running on the hardware layer, and an application layer running on the operating system layer. The hardware layer may include hardware such as a central processing unit (central processing unit, CPU), a memory management unit (memory management unit, MMU), and a memory (which is also referred to as a main memory). An operating system at the operating system layer may be any one or more computer operating systems that implement service processing through a process (process), for example, a Linux operating system, a Unix operating system, an Android operating system, an iOS operating system, or a Windows operating system. The application layer may include an application such as a browser, an address book, word processing software, or instant messaging software.

With reference to the accompanying drawings, the following describes embodiments of this application by using a plurality of example embodiments. Methods in the following embodiments may all be implemented in the electronic device having the foregoing hardware structure. For ease of description, in embodiments of this application, the mobile phone shown in FIG. 1 is used as an example of the electronic device.

This embodiment of this application provides an audio processing method. When an operation by a user to lower a volume or increase a volume is received, if it is determined that an adjusted volume level is less than or equal to a preset volume level, a private call mode is enabled. For example, sound production may be simultaneously performed through a screen and a receiver, and the two sound production manners may be controlled to produce sounds at different volume intensity (for example, intensity of sounds produced through the screen is greater than or equal to intensity of sounds produced through the receiver), to avoid sound leakage, protect call privacy of the user, and improve call experience of the user. If it is determined that the adjusted volume level is greater than the preset volume level, a high volume mode is enabled. For example, sound production may be simultaneously performed through the screen and the receiver, and the two sound production manners may be controlled to produce sounds at different volume intensity (for example, intensity of sounds produced through the receiver is greater than intensity of sounds produced through the screen), to ensure a good voice output effect and improve call experience of the user.

The audio control method provided in this embodiment of this application may be applied to a voice call scenario. For example, the voice call scenario may be an incoming call scenario of answering a call, or a call scenario after an incoming call is answered, or a call scenario after a call is made, or a call scenario after an outgoing call is answered. Of course, it may also be any other possible voice call scenario. This is not limited in embodiments of this application. For ease of description, interfaces used in the above various voice call scenarios are collectively referred to as a voice call interface.

In this embodiment of this application, the electronic device enables a smart privacy call function by default. After the smart privacy call function is enabled, the private call mode may be directly enabled in a voice call scenario, or may be enabled in a voice call scenario in which a volume value of the electronic device is less than the preset volume level. This may be specifically determined based on an actual use requirement. This is not limited in embodiments of this application.

As described above, the private call mode may output voice in combination with the screen sound production manner and the receiver sound production manner. Optionally, voice output intensity corresponding to the screen sound production manner is greater than or equal to voice output intensity corresponding to the receiver sound production manner. Alternatively, the private call mode may output voice only by using the screen sound production manner. Compared with the receiver sound production manner, the screen sound production manner can effectively prevent sound leakage during a voice call. Therefore, when the user makes and answers a call in a quiet environment, the user usually intends to reduce the sound leakage. In this case, the private call mode may be used, to ensure that the call is clear and the sound leakage is reduced, thereby achieving an effect of protecting user privacy.

In some embodiments, when the electronic device answers a call, the private call mode corresponding to the smart privacy call function may be enabled by default, and related prompt information indicating that the smart privacy call function is enabled is displayed in an incoming call interface. Optionally, the prompt information may be a text, an icon, or a combination of a text and an icon.

In some embodiments, after the smart privacy call function is enabled, an introduction of the smart privacy call function may be displayed in a bubble box on the voice call interface each time the receiver is used to make and answer a call (for example, reducing sound leakage and protecting privacy while ensuring a clear call). Operations such as "smart privacy call enabled" and/or "closer to this region to hear more clearly" may further be displayed in a specific region (that is, a screen sound production region). The prompt information is used to introduce the smart privacy call function and guide the user to use the smart privacy call function.

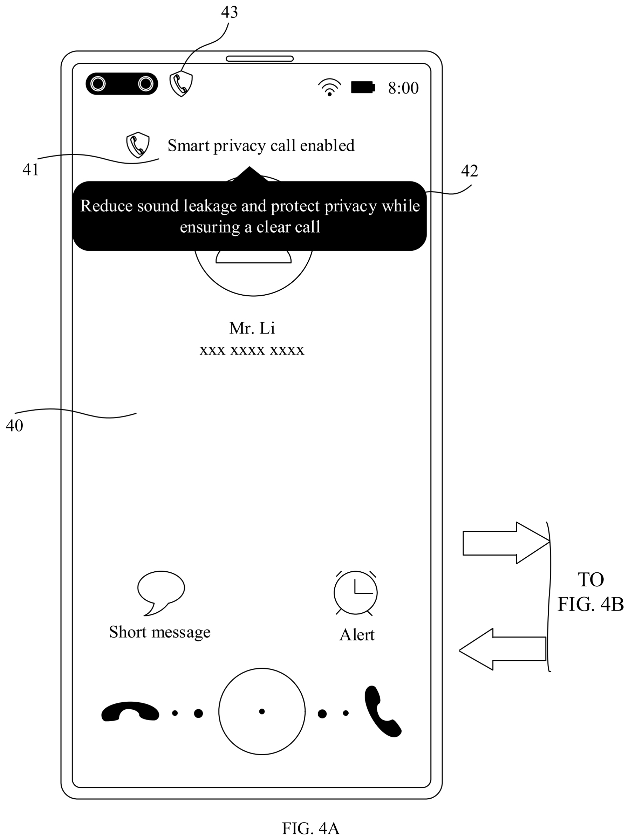

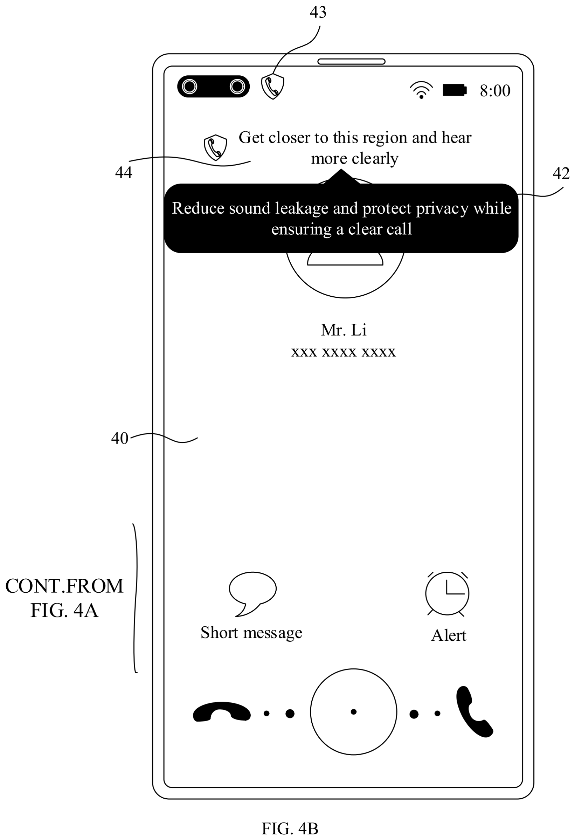

For example, an incoming call scenario is used as an example. FIG. 4A and FIG. 4B show a schematic diagram of an incoming call interface. As shown in FIG. 4A, the following prompt information is displayed in an incoming call interface 40: "smart privacy call enabled" 41, "reduce sound leakage and protect privacy while ensuring a clear call" 42 (located in a bubble box), and an icon 43 identifying a privacy call (displayed in a status bar). As shown in FIG. 4B, the following prompt information is displayed in the incoming call interface 40: "closer to this region to hear more clearly" 44, "reduce sound leakage and protect privacy while ensuring a clear call" 42, and the icon 43 identifying a private call. The prompt information is used for indicating that the private call mode is enabled. In the incoming call interface 40, "smart privacy call enabled" 41 and "closer to this region to hear more clearly" 44 may be alternately displayed (that is, carousel). In this way, the user may know the smart privacy call function faster and learn to use the function, thereby improving human-machine interaction experience.

It should be noted that the prompt information here is illustrative, and specific content, a display position, a display quantity, a display size, a display style, and the like of the prompt information may be determined based on an actual use requirement. This is not limited in embodiments of this application.

Optionally, the above prompt information may be displayed on a voice call interface of first N call scenarios (for example, a value of N is 3) after the smart privacy call function is enabled, to guide the user to use the smart privacy call function and cancel the display in a subsequent call scenario. For example, in the voice call interface, the display of the introduction to the smart privacy call function such as the "reduce sound leakage and protect privacy while ensuring a clear call" may be canceled.

In some embodiments, when the user taps any position in the voice call interface (including an answer button), the display of the introduction and explanation information of the smart privacy call function in the voice call interface is canceled, for example, the bubble box corresponding to the "reduce sound leakage and protect privacy while ensuring a clear call" disappears.

In some embodiments, the "smart privacy call enabled" may be a resident prompt in the voice call interface. In other words, when the user taps any position in the voice call interface (including the answer button), the prompt information indicating "smart privacy call enabled" may be kept displayed.

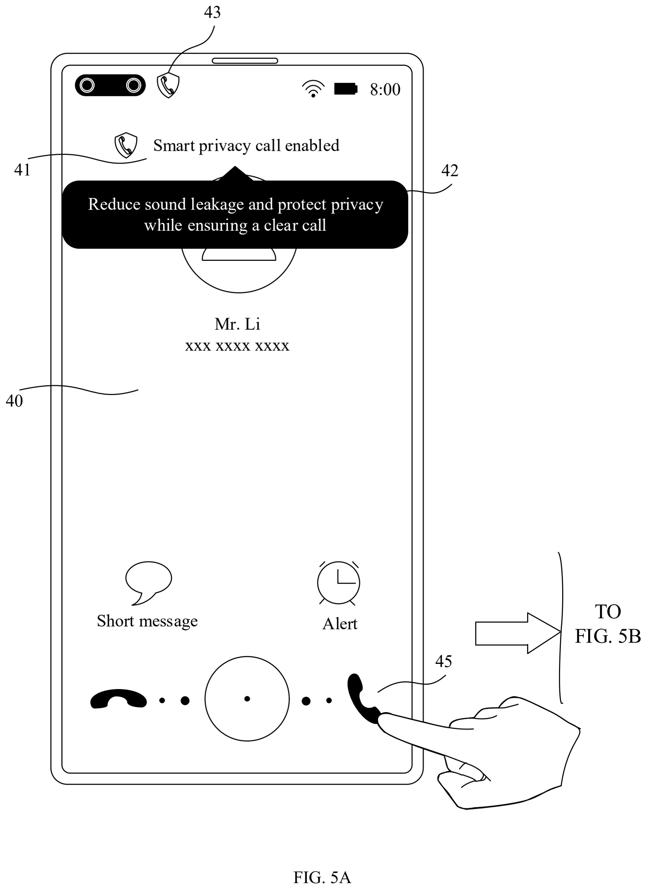

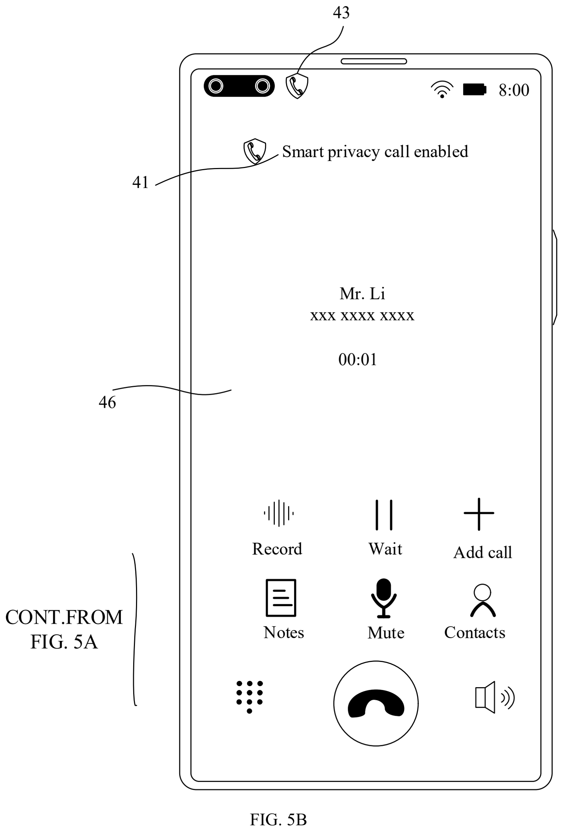

For example, a call scenario after an incoming call is answered is used as an example. FIG. 5A and FIG. 5B show a schematic diagram of an incoming call interface and a voice call interface in which a call is answered. As shown in FIG. 5A, the user taps an answer button 45 in the incoming call interface 40 to answer a call. As shown in FIG. 5B, in response to an operation performed by the user on the answer button 45, the incoming call interface 40 is switched and displayed as a voice call interface 46. The following prompt information is displayed in the voice call interface 46: "smart privacy call enabled" 41 and the icon 43 identifying a privacy call. The bubble box corresponding to the "reduce sound leakage and protect privacy while ensuring a clear call" shown in FIG. 5A disappears.

In some embodiments, in a case that the smart privacy call function is enabled, when the user pulls down a menu bar, a notification card for indicating that a voice call is in progress and a notification card for indicating that the smart privacy call function is enabled are displayed in the menu bar.

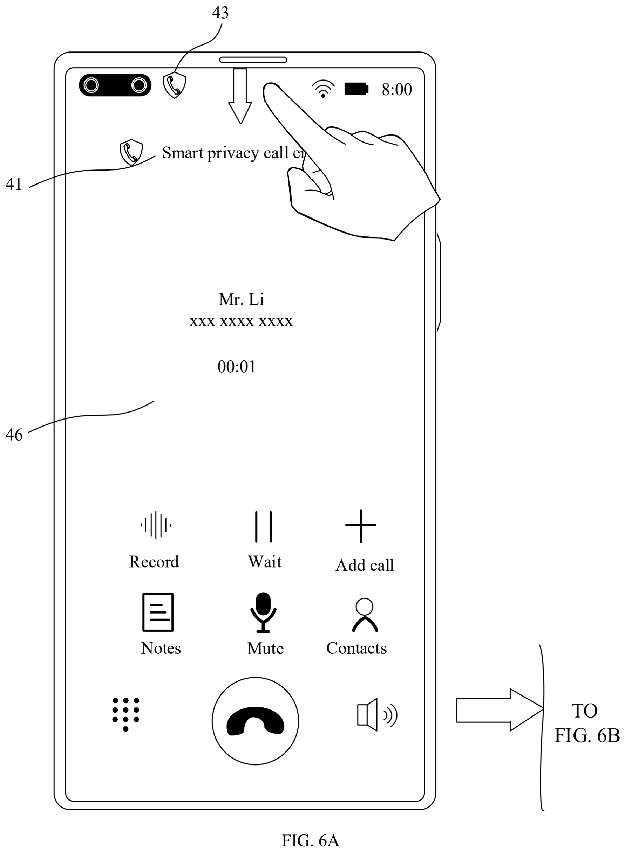

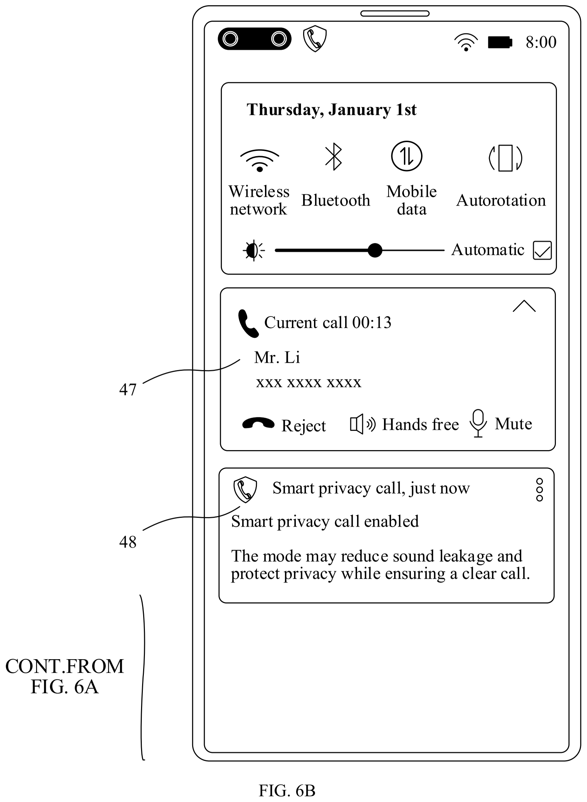

For example, FIG. 6A and FIG. 6B show a schematic diagram of a notification card about a smart privacy call function displayed in a menu bar. As shown in FIG. 6A, the user slides a finger down in a direction of an arrow on the voice call interface 46 to pull down the menu bar. As shown in FIG. 6B, the menu bar (also referred to as a notification interface) is displayed. The menu bar displays a notification card 47 and a notification card 48. The notification card 47 is used for indicating that a voice call is in progress, and the notification card 48 is used for indicating that the smart privacy call function is enabled.

These notification cards facilitate the user to better learn an application scenario and an application effect of the smart privacy call function, thereby improving user experience.

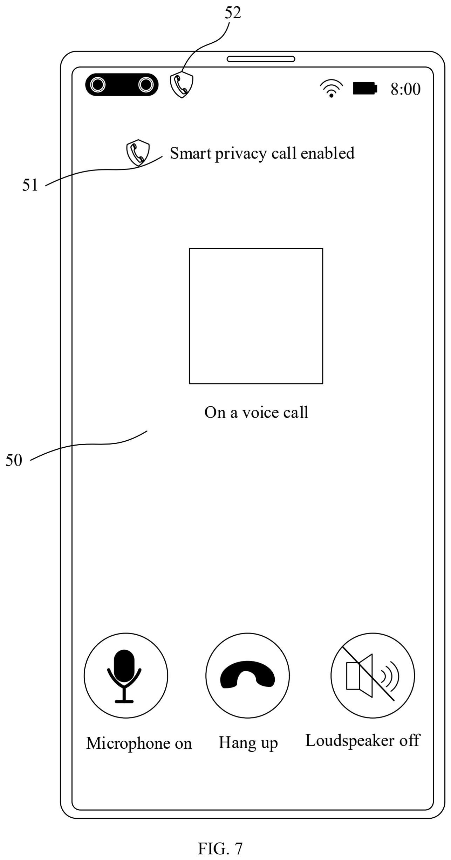

In some embodiments, the audio processing method provided in this embodiment of this application is also applicable to voice over Internet protocol (voice over Internet protocol, VoIP). For example, FIG. 7 shows a schematic diagram of an interface of a call scenario of a VoIP phone. As shown in FIG. 7, "smart privacy call enabled" 51 is displayed on a VoIP call interface 50, and an icon 52 identifying a privacy call is used for prompting that a current call scenario uses the private call mode to realize the voice output.

It should be noted that in the above embodiment, the incoming call scenario and the call scenario after an incoming call is answered are used as examples for illustrative descriptions. It may be understood that in an actual implementation, the audio processing method provided in this embodiment of this application is also applicable to an outgoing call scenario and a call scenario after an outgoing call is answered. For a specific description of the smart privacy call function, reference may be made to the detailed descriptions of the smart privacy call function in the above call scenario and the call scenario after a call is answered. Details are not described herein again.

It should be further noted that the audio processing method provided in this embodiment of this application is also applicable to a scenario of playing voice messages, for example, some social applications support receiving or sending voice messages. The above smart privacy call function may also be used when the voice messages are played, so as to avoid sound leakage during playback of the voice messages.

It should be further noted that the audio processing method provided in this embodiment of this application is also applicable to a scenario of playing recording. For example, the above smart privacy call function may also be used when the recording is played, so as to avoid sound leakage during recording playback.

It may be understood that the audio processing method provided in this embodiment of this application may be applied to various scenarios where a user needs to perform on-ear listening through the electronic device. This is not limited in embodiments of this application.

In this embodiment of this application, after the smart privacy call function is enabled, in a voice call scenario, the private call mode may be automatically enabled when an output volume level of the electronic device is less than the preset volume level. In other words, in the voice call scenario, when the output volume level of the electronic device is less than the preset volume level, the electronic device automatically switches to the private call mode. The voice output manner corresponding to the private call mode (for example, sounds are jointly produced through the screen and the receiver, and intensity of sounds produced through the screen is greater than intensity of sounds produced through the receiver) is used for outputting voice to avoid sound leakage during a voice call.

In some other embodiments, in a voice call scenario, when an operation by the user to trigger a decrease in a volume continuously for a plurality of times is sensed, the electronic device may also automatically switch the private call mode. The voice output manner corresponding to the private call mode (for example, sounds are jointly produced through the screen and the receiver, and intensity of sounds produced through the screen is greater than intensity of sounds produced through the receiver) is used for outputting voice to avoid sound leakage during a voice call.

In some embodiments, after the electronic device enables the private call mode, the electronic device may output voice by combining a screen sound production manner and a receiver sound production manner. Voice output intensity (for example, 70%) corresponding to the screen sound production manner is greater than or equal to voice output intensity (for example, 30%) corresponding to the receiver sound production manner. In other words, the mobile phone may use the screen sound production as a main manner and the receiver sound production as an auxiliary manner to simultaneously play voice. In the private call mode, sounds may also be produced only through the screen.

In some embodiments, after the electronic device enables the high volume mode, the electronic device may output voice by combining the receiver sound production manner and the screen sound production manner. Voice output intensity (for example, 70%) corresponding to the receiver sound production manner is greater than voice output intensity (for example, 30%) corresponding to the screen sound production manner. In other words, the mobile phone may use the receiver sound production as a main manner and the screen sound production as an auxiliary manner to simultaneously play voice.

In some embodiments, when the private call mode is switched to the high volume mode, an overall sound volume (or referred to as loudness or intensity) may also be increased based on a volume corresponding to the private call mode to improve a voice playback effect. In other words, overall sound loudness of sounds produced through the receiver and the screen in the high volume mode is greater than overall sound loudness of sounds produced through the receiver and the screen in the private call mode.

Compared with the receiver sound production manner, the screen sound production manner can effectively prevent sound leakage during a voice call. Therefore, when the user makes and answers a call in a quiet environment, the user usually intends to reduce the sound leakage. In this case, the private call mode may be used, to ensure that the call is clear and the sound leakage is reduced, thereby achieving an effect of protecting user privacy.

The above describes possible manners to enable the private call mode and a display effect of the voice call interface after the private call mode is enabled. The following describes possible implementations of the private call mode in actual use in detail. For example, the following describes how to realize the switching between the private call mode and the high volume mode, which user operations are performed and what conditions are met to trigger mode switching, and a change of a volume bar during the mode switching.

In this embodiment of this application, by using the audio processing method provided in this application, the private call mode and the high volume mode may be controlled to be switched and used based on an output volume level or range of the electronic device.

For the switching between the private call mode and the high volume mode, the electronic device may predefine the following rules.

When the output volume level of the electronic device is less than or equal to the preset volume level, or when the output volume level of the electronic device is within a preset first volume level range, the private call mode is automatically enabled.

When the output volume level of the electronic device is greater than the preset volume level, or when the output volume level of the electronic device is within a preset second volume level range, the private call mode is automatically exited and the high volume mode is entered. A volume level corresponding to each level in the second volume level range is greater than a volume level corresponding to each level in the first volume level range.

It should be noted that the output volume level of the above electronic device may be a volume level when a call is made or answered, or may be a volume level after the user triggers adjustment.

In other words, in a scenario where the user performs on-ear listening by using the electronic device, the audio processing method provided in this application may automatically enable the private call mode when the output volume level of the electronic device is reduced and is less than or equal to the preset volume level, so as to avoid sound leakage during a voice call. When the output volume level of the electronic device increases and exceeds the preset volume level, the private call mode is automatically exited and the high volume mode is entered to ensure a high volume playback effect.

For example, when an operation performed by a user to lower a volume or increase a volume is received, if it is determined that an adjusted volume level is less than or equal to a preset volume level, a private call mode is enabled. For example, sound production may be simultaneously performed through a screen and a receiver, and the two sound production manners may be controlled to produce sounds at different volume intensity (for example, intensity of sounds produced through the screen is greater than intensity of sounds produced through the receiver), to avoid sound leakage and improve call experience of the user. If it is determined that the adjusted volume level is greater than the preset volume level, a high volume mode is enabled. For example, sound production may be simultaneously performed through the screen and the receiver, and the two sound production manners may be controlled to produce sounds at different volume intensity (for example, intensity of sounds produced through the receiver is greater than intensity of sounds produced through the screen), to ensure a good voice output effect and improve call experience of the user.

In some embodiments, the electronic device may divide different volumes into 10 levels, including levels 1 to 10, where volume levels corresponding to the levels 1 to 10 increase level by level. The volume levels may be expressed in decibels (dB). A volume value or a volume range corresponding to each level may be determined based on an actual use requirement. This is not limited in embodiments of this application.

In some embodiments, a magnitude of the volume value may be represented in a form of a volume bar. For example, volume levels of different magnitudes are distinguished by filling the volume bar with different lengths. For example, larger filling in the volume bar indicates a higher volume level. In this case, voice is outputted at a higher volume. When the volume bar is filled, corresponding to the level 10, it indicates that a maximum volume is reached. When the volume bar is not filled, it indicates mute.

Specific to a solution of this application, one of the 10 levels may be used as the preset volume level based on an actual situation. For example, a level 6 may be used as the preset volume level. Accordingly, the preset first volume level range may be in a range of [1, 6], and the preset second volume level range may be in a range of [7, 10].

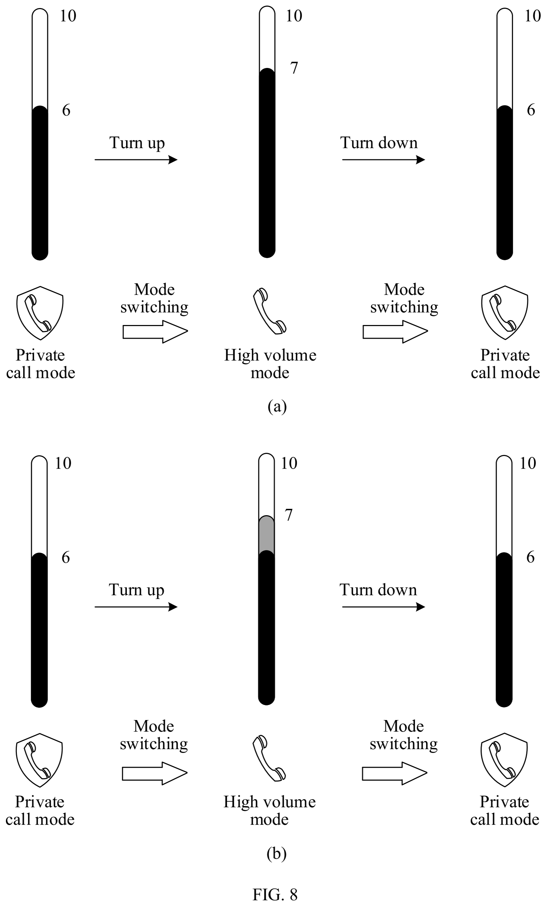

For example, enabling different call modes for different volume levels is described here. As shown in (a) in FIG. 8, the volume bar corresponds to the volume level 6 (here, the level 6 is used as an example, and it may also be any level from a level 1 to a level 5), and the volume level 6 is in a volume level range of [1, 6]. In this case, the private call mode is enabled. Refer to (b) in FIG. 8. The volume bar corresponds to a volume level 7 (here, the level 7 is used as an example, and it may also be any level from a level 8 to a level 10), and the volume level 7 is in a volume level range of [7, 10]. In this case, the high volume mode is enabled.

For example, the switching of different call modes is described here. As shown in (a) in FIG. 8, when the user turns up the volume, a fill volume of the volume bar may be increased, for example, the volume bar changes from the level 6 to the level 7. The private call mode is automatically exited and the high volume mode is entered. To be specific, the private call mode is switched to the high volume mode. When the user turns down the volume, the fill volume of the volume bar may be reduced, for example, the volume bar changes from the level 7 to the level 6. The high volume mode is switched to the private call mode.

It should be noted that the above example uses the volume bar changing from the level 6 to the level 7 and the volume bar changing from the level 7 to the level 6 as an example. In an actual implementation, the change of any level from the level 1 to the level 6 to any level from the level 7 to the level 10 can trigger switching from the private call mode to the high volume mode; and a changing from any level from the level 7 to the level 10 to any level from the level 1 to the level 6 can trigger switching from the high volume mode to the private call mode.

It should be noted that an illustrative description is made above by using the volume level 6 as the preset volume level. In an actual implementation, the value of the preset volume level may be selected based on a specific situation. This is not limited in embodiments of this application.

Optionally, a display form, a display color, a display length, and the like of the volume bar in the high volume mode and the private call mode are not limited in embodiments of this application. In some embodiments, a volume bar in the high volume mode and a volume bar in the private call mode may be as shown in (a) in FIG. 8. In some other embodiments, the volume bar in the high volume mode and the volume bar in the private call mode may be as shown in (b) in FIG. 8. The volume bars of the two call modes differ in the display color. For ease of description, in this embodiment of this application, the volume bar shown in (a) in FIG. 8 is used as an example for illustrative description.

Optionally, in this embodiment of this application, the private call mode and the high volume mode may be represented by different icons to distinguish the private call mode and the high volume mode. Specifically, the icon for identifying the call mode may be determined based on an actual use requirement in terms of a display position, a display size, and a display form. This is not limited in embodiments of this application. Optionally, the icon for identifying the call mode may be displayed below or above the volume bar.

In some embodiments, in a case that the call mode is switched, when a filling volume of the volume bar changes, the icon of the call mode also accordingly changes to prompt the user that the call mode is switched, thereby improving user experience.

In some embodiments, when the call mode is switched, the electronic device may vibrate to prompt the user to improve user experience.

In some embodiments, the user may press a physical volume button of the electronic device to turn up the volume or lower the volume. In some other embodiments, the user may swipe on the volume bar displayed on the screen to turn up the volume or lower the volume.

The process of switching the above call mode is described below with reference to the accompanying drawings.

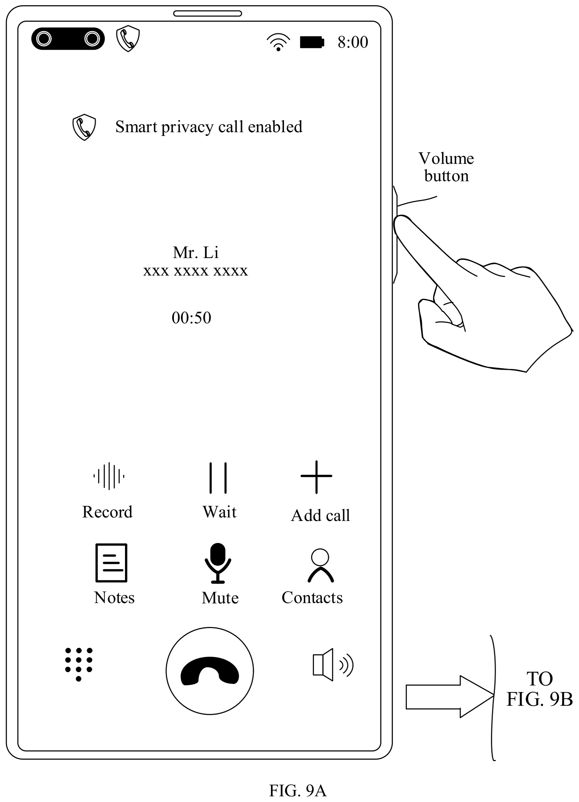

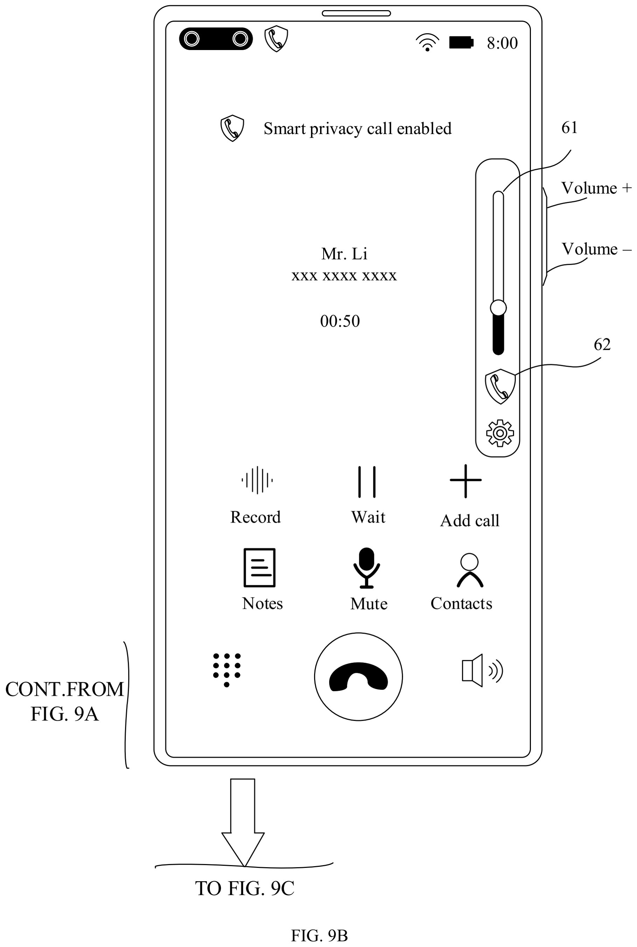

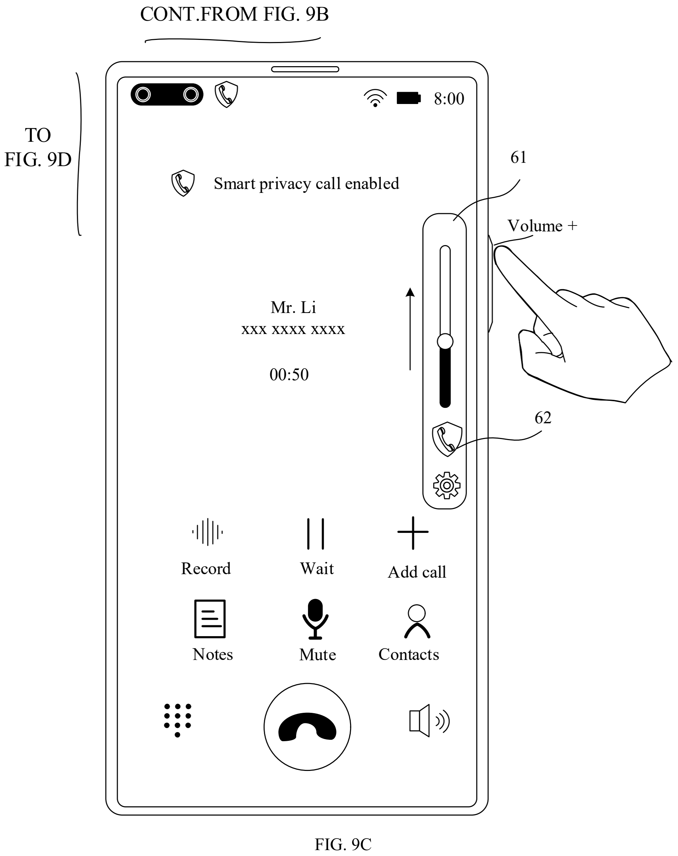

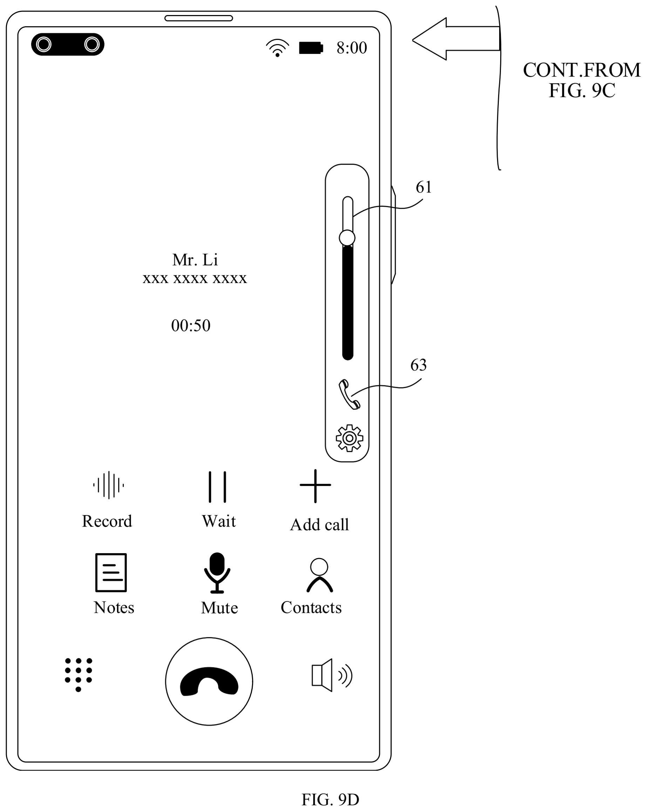

For example, FIG. 9A to FIG. 9D show a schematic diagram of an interface for a call mode switching. As shown in FIG. 9A, the private call mode is enabled for a current voice call. The user may press the volume button to adjust the volume. As shown in FIG. 9B, after the user presses the volume button, a volume bar 61 and an icon 62 for identifying the private call mode are displayed in the voice call interface. The volume button includes a volume up button (volume + button) and a volume down button (volume-button), and the user can press the volume + button to turn up the volume, or the volume-button to turn down the volume. As shown in FIG. 9C and FIG. 9D, when the user presses the volume + button to turn up the volume, the volume bar increases in a direction of an arrow. When the adjusted volume level exceeds the preset volume level (the level 6), the high volume mode is switched from the private call mode. As shown in FIG. 9D, in the high volume mode, the icon 62 for identifying the private call mode is updated and displayed as an icon 63 for identifying the high volume mode. In addition, relevant prompt information of the private call mode, such as "smart privacy call enabled" is no longer displayed, and the icon for identifying the private call mode in a status bar is also canceled to display.

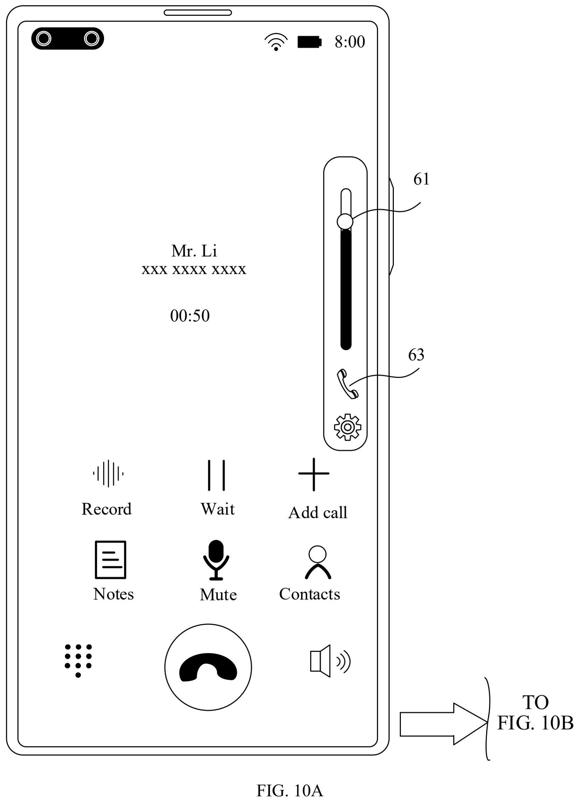

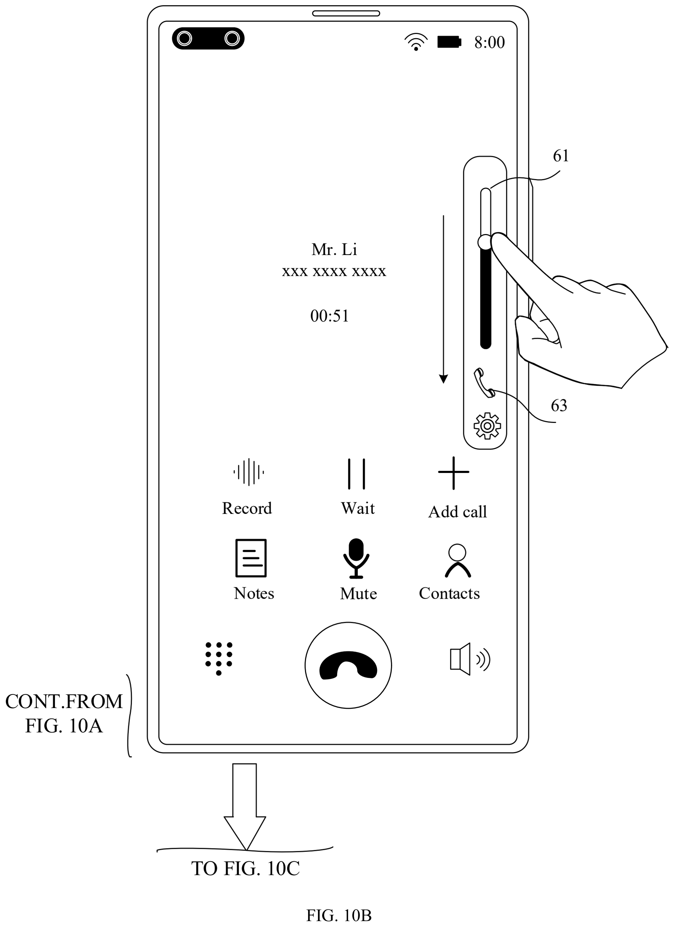

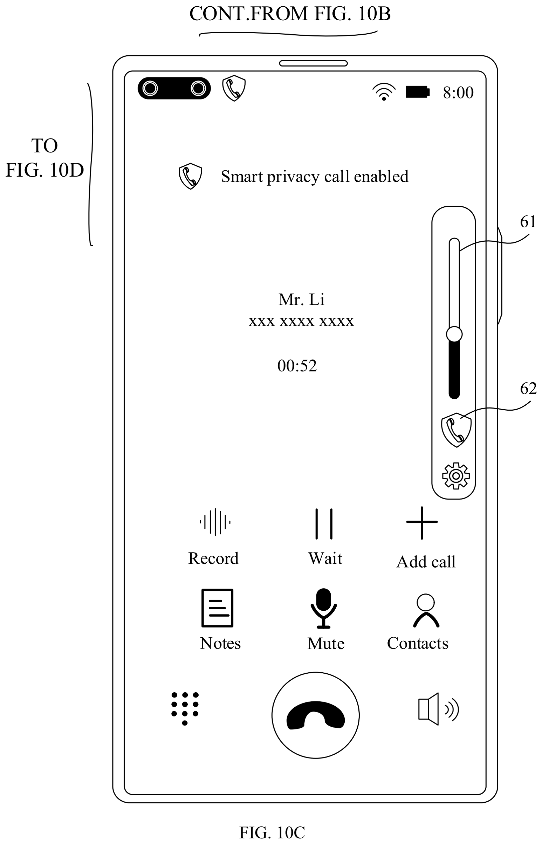

For another example, FIG. 10A to FIG. 10D show a schematic diagram of another interface for a call mode switching. As shown in FIG. 10A, the voice call interface displays a volume bar 61 and an icon 63 for identifying the high volume mode, whereby the current voice call is learned to be the high volume mode. The user may adjust the volume by sliding a finger in a specific direction on the volume bar 61, for example, sliding the finger in a direction may turn up the volume, and sliding the finger in an opposite direction may turn down the volume. As shown in FIG. 10B, the user slides the finger in a direction indicated by an arrow on the volume bar 61 to turn down the volume. As shown in FIG. 10C, when the user operates on the volume bar 61 to turn down the volume, the volume bar drops in the direction indicated by the arrow. When the adjusted volume level is less than or equal to a preset volume level (the level 6), the private call mode is switched from the high volume mode. As shown in FIG. 10C, in the private call mode, the icon 63 for identifying the high volume mode is updated and displayed as an icon 62 for identifying the private call mode. In addition, the "smart privacy call enabled" is displayed, and the icon for identifying the private call mode may also be displayed in the status bar to prompt the user that the private call mode is currently enabled.

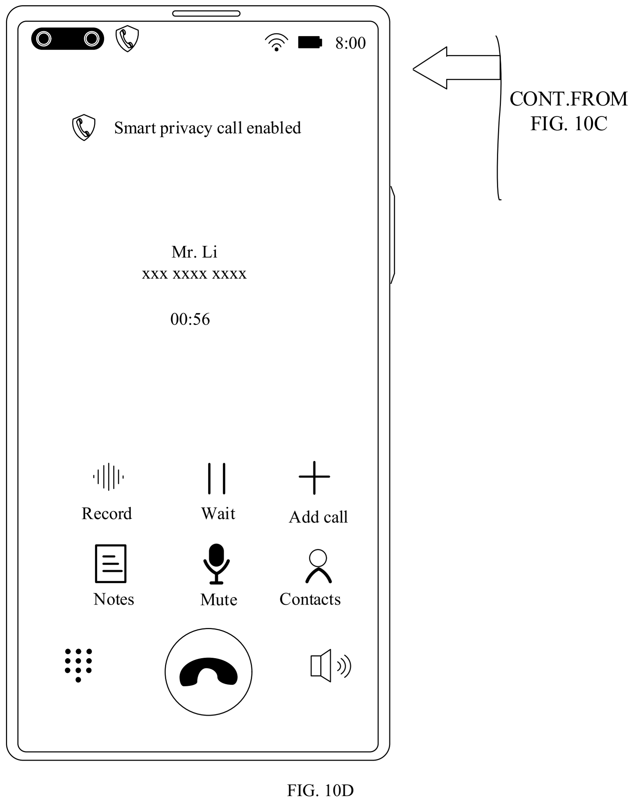

Optionally, as shown in FIG. 10C and FIG. 10D, after a preset duration (such as 5 seconds), the volume bar and the icon for identifying the call mode are hidden. The user may press the physical volume button to call out the volume bar again and the icon for identifying the call mode.

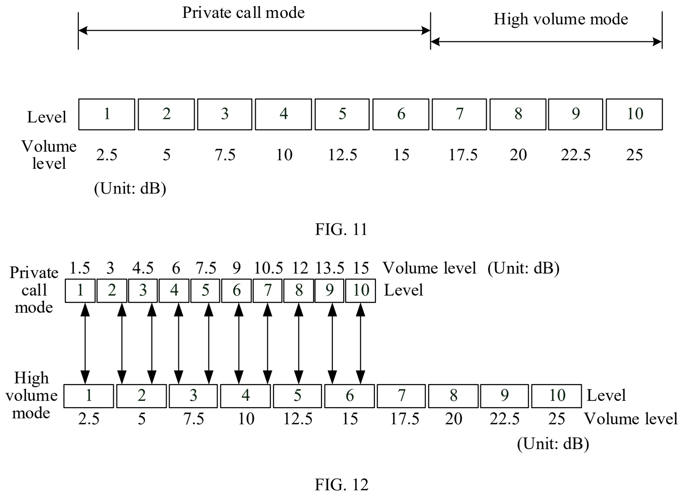

In this embodiment of this application, FIG. 11 shows a schematic diagram of a division of volume levels and a mapping relationship between each volume level and volume value. As shown in FIG. 11, the volume level is divided into levels 1 to 10, where when the volume level is in a range of levels 1 to 6, the private call mode is enabled; and when the volume level is in a range of levels 7 to 10, the high volume mode is enabled. For example, the volume levels corresponding to levels 1 to 10 respectively are 2.5 dB, 5 dB, 7.5 dB, 10 dB, 12.5 dB, 15 dB, 17.5 dB, 20 dB, 22.5 dB, and 25 dB. It may be understood that the mapping relationship between each volume level and volume value is described by using an example. It may be understood that in an actual implementation, the volume value corresponding to each volume level may be set based on an actual use requirement. This is not limited in embodiments of this application.

It should be noted that in the above embodiment, the private call mode and the high volume mode use a same volume level division rule. In some embodiments, the private call mode and the high volume mode may also use different volume level division rules. The volume level division rules for each of the two call modes and a volume level mapping relationship of the two call modes are described below by using examples with reference to FIG. 12.

As shown in FIG. 12, the private call mode may also correspond to 10 volume levels. The volume levels corresponding to the 10 volume levels are 1.5 dB to 15 dB, respectively. For example, the volume level 1 corresponds to 1.5 dB, and the volume level 10 corresponds to 15 dB. The high volume mode corresponds to 10 volume levels, and the volume levels corresponding to the 10 volume levels are 2.5 dB to 25 dB, respectively. For example, the volume level 1 corresponds to 2.5 dB, and the volume level 10 corresponds to 25 dB. The 10 volume levels in the private call mode cover a same volume value range as those covered by the volume 1 to the volume 6 in the high volume mode. It may be understood that the 10 volume levels of the private call mode are a finer level division of the volume level 1 to the volume level 6 in the high volume mode.

FIG. 12 further shows a mapping relationship of volume levels when a private call mode is switched to a high volume mode. As shown in FIG. 12, the volume value corresponding to the volume level 10 in the private call mode is 15, and the volume value corresponding to the volume level 6 in the high volume mode is also 15. In other words, the volume level 10 of the private call mode is equivalent to the volume level 6 of the high volume mode.

The volume level 9 (13.5 dB) of the private call mode is approximately equivalent to the volume level 6 (15 dB) of the high volume mode. The volume level 8 (12 dB) in the private call mode is approximately equivalent to the volume level 5 (12.5 dB) in the high volume mode. The volume levels 6 (9 dB) and 7 (10.5 dB) in the private call mode are approximately equivalent to the volume level 4 (10 dB) in the high volume mode. The volume level 4 (6 dB) in the private call mode is approximately equivalent to the volume level 3 (7.5 dB) in the high volume mode. The volume level 5 (7.5 dB) in the private call mode is equivalent to the volume level 3 (7.5 dB) in the high volume mode. The volume levels 2 (3 dB) and 3 (4.5 dB) in the private call mode are approximately equivalent to the volume level 2 (5 dB) in the high volume mode. The volume level 1 (1.5 dB) of the private call mode is approximately equivalent to the volume level 1 (2.5 dB) of the high volume mode.

It should be noted that the mapping relationship shown in FIG. 12 is an example. Details may be determined based on an actual use requirement. This is not limited in embodiments of this application.

According to the volume level division rules shown in FIG. 11 and FIG. 12, in the process of switching between the private call mode and the high volume mode, a variable form of the volume bar may be implemented in various implementations. Embodiments of this application provide the following three implementations by using examples.

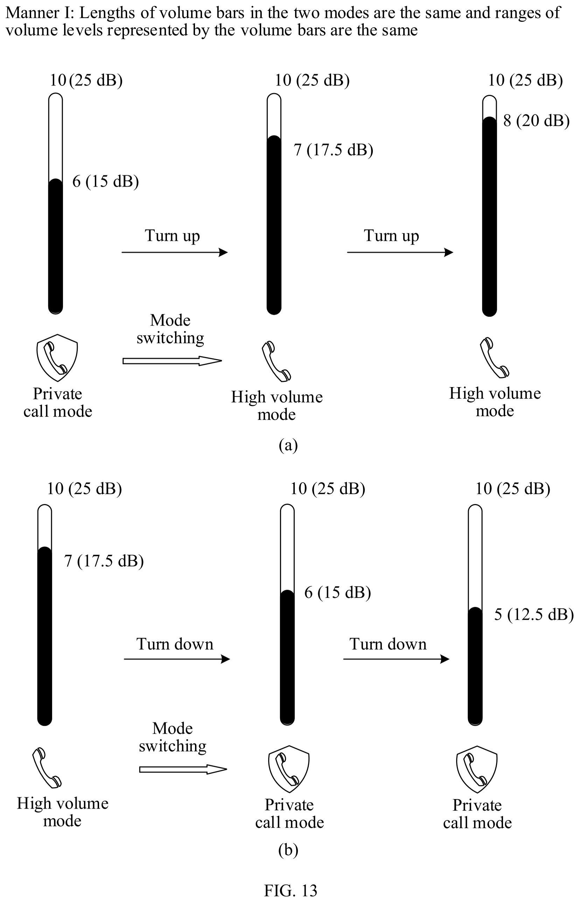

Manner I: With reference to FIG. 11 and FIG. 13, lengths of the volume bars in the two modes are the same and ranges of volume levels represented by the volume bars are the same. A maximum level of the volume bar in both modes is volume level 10, and the volume level 10 corresponds to 25 dB.

As shown in (a) in FIG. 13, the current volume bar represents the volume level 6 (15 dB). In this case, the private call mode is used. When the user turns up the volume, a shadow filling degree of the volume bar increases. For example, the volume level is increased to the volume level 7 (17.5 dB). In this case, a mode switch occurs. To be specific, the private call mode is exited and the high volume mode is entered. Further, when the user continues to turn up the volume, the shadow filling degree of the volume bar increases. For example, the volume level is increased to the volume level 8 (20 dB). In this case, the high volume mode is still used.

As shown in (b) in FIG. 13, the current volume bar represents the volume level 7 (17.5 dB). In this case, the high volume mode is used. When the user turns down the volume, a shadow filling degree of the volume bar decreases, for example, the volume level is reduced to the volume level 6 (15 dB). In this case, a mode switch occurs. To be specific, the private call mode is enabled, and the high volume mode is exited. Further, when the user continues to turn down the volume, the shadow filling degree of the volume bar decreases. For example, the volume level is reduced to the volume level 5 (12.5 dB). In this case, the private call mode is still used.

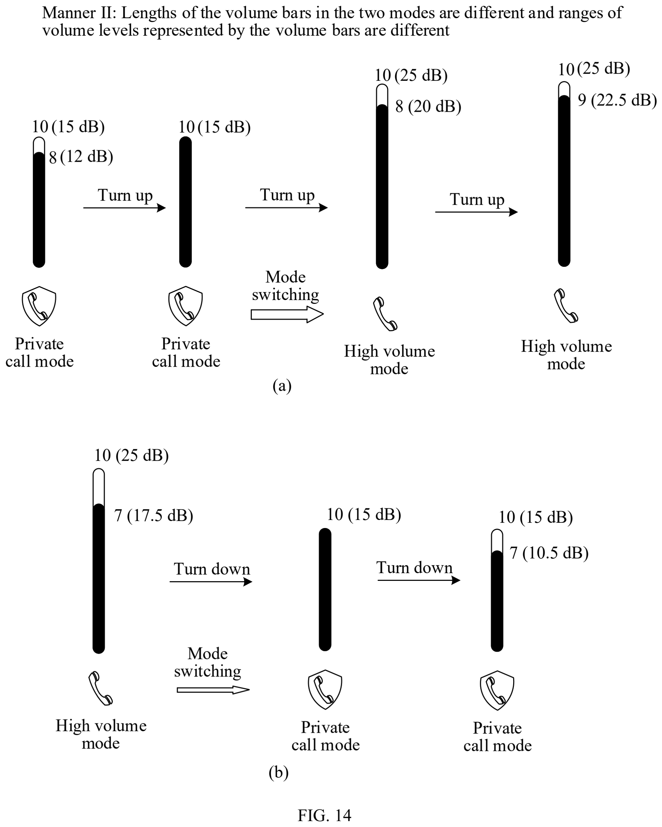

Manner II: With reference to FIG. 12 and FIG. 14, lengths of the volume bars in the two modes are different and ranges of volume levels represented by the volume bars are different. Different from the Manner I, in the Manner II, the volume bar length of the private call mode is less than the volume bar length of the high volume mode. A maximum level of the volume bar in the private call mode is the volume level 10, and the volume level 10 corresponds to 15 dB; and a maximum level of the volume bar in the high volume mode is the volume level 10, and the volume level 10 corresponds to 25 dB.

As shown in (a) in FIG. 14, the current volume bar represents the volume level 8 (12 dB). In this case, the private call mode is used. When the user turns up the volume, a shadow filling degree of the volume bar becomes full, and the volume level is increased to the volume level 10 (15 dB). When the user continues to turn up the volume, the volume bar becomes longer and the shadow filling degree becomes unfilled. For example, the corresponding volume level is the volume level 8 (20 dB). In this case, a mode switch occurs. To be specific, the private call mode is exited and the high volume mode is entered. Further, when the user continues to turn up the volume, the length of the volume bar changes and the shadow filling degree of the volume bar increases. For example, the volume level is increased to the volume level 9 (22.5 dB). In this case, the high volume mode is still used.

As shown in (b) in FIG. 14, the current volume bar represents the volume level 7 (17.5 dB). In this case, the high volume mode is used. When the user turns down the volume, the volume bar becomes shorter and the shadow filling degree becomes full, and the corresponding volume level is the volume level 10 (15 dB). In this case, the mode switch occurs. To be specific, the private call mode is enabled and the high volume mode is exited. Further, when the user continues to turn down the volume, the length of the volume bar does not change and the shadow filling degree decreases. For example, the volume level is reduced to the volume level 7 (10.5 dB). In this case, the private call mode is still used.

It can be seen that in the Manner II, the volume bar may be adjusted to the maximum level in the private call mode, that is, the volume level 10, and the volume bar remains full in this case.

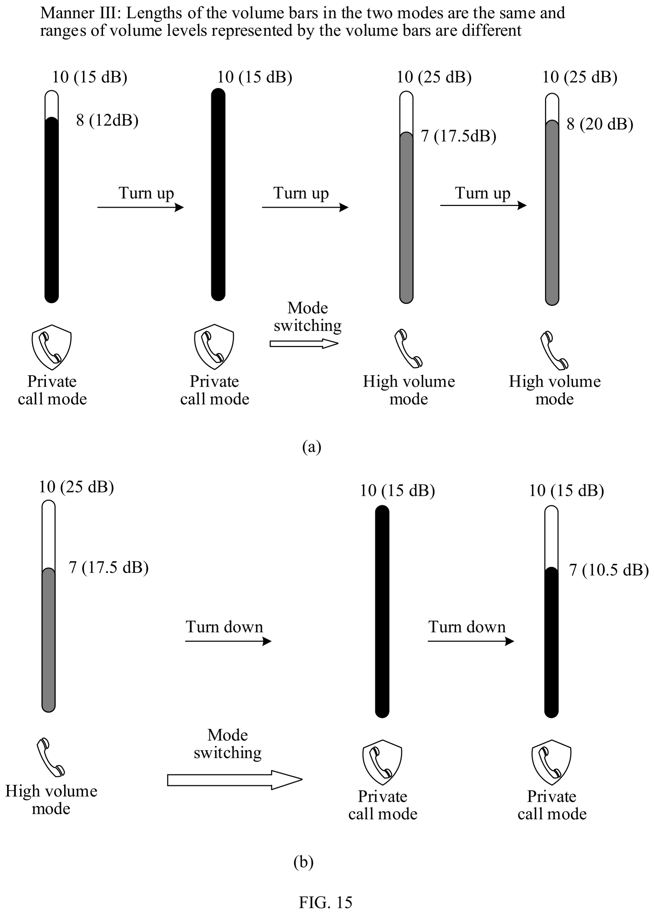

Manner III: With reference to FIG. 12 and FIG. 15, lengths of the volume bars in the two modes are the same and ranges of volume levels represented by the volume bars are different. Different from the Manner I, in the Manner III, a maximum level of the volume bar in the private call mode is the volume level 10, and the volume level 10 corresponds to 15 dB; and a maximum level of the volume bar in the high volume mode is the volume level 10, and the volume level 10 corresponds to 25 dB. For ease of distinguishing, different colors or patterns may be used in the Manner III to respectively represent the shadows of the volume bars of the two modes.

As shown in (a) in FIG. 15, the current volume bar represents the volume level 8 (12 dB). In this case, the private call mode is used. When the user turns up the volume, the shadow filling degree of the volume bar becomes full, and the volume level is increases to the volume level 10 (15 dB). In this case, the mode is still the private call mode. Further, when the user continues to turn up the volume, the shadow filling degree of the volume bar decreases and the shadow color changes, for example, the corresponding volume level is the volume level 7 (17.5 dB). In this case, a mode switch occurs. To be specific, the private call mode is exited and the high volume mode is entered. Further, when the user continues to turn up the volume, a shadow filling degree of the volume bar increases. For example, the volume level is increased to the volume level 8 (20 dB). In this case, the mode is still the high volume mode.

As shown in (b) in FIG. 15, the current volume bar represents the volume level 7 (17.5 dB). In this case, the high volume mode is used. When the user turns down the volume, the shadow filling degree of the volume bar becomes full and the shadow color changes, and the corresponding volume level is the volume level 10 (15 dB). In this case, a mode switch occurs. To be specific, the private call mode is exited and the high volume mode is entered. Further, when the user continues to turn down the volume, a shadow filling degree of the volume bar decreases. For example, the volume level is reduced to the volume level 7 (10.5 dB). In this case, the mode is still the private call mode.

The process of switching between the private call mode and the high volume mode is described in detail above, and a possible implementation of switching between the private call mode and the loudspeaker mode is further described below.

In some embodiments, through the audio processing method provided in this application, in a case that the electronic device is in the private call mode, when the electronic device receives an operation of tapping a loudspeaker icon by the user, the loudspeaker mode may be switched. To be specific, the voice is outputted through the loudspeaker. In this case, neither the screen nor the receiver produces sounds. Optionally, further, when the electronic device receives the operation of tapping a loudspeaker icon by the user, the loudspeaker mode may be exited and the private call mode may be entered again.

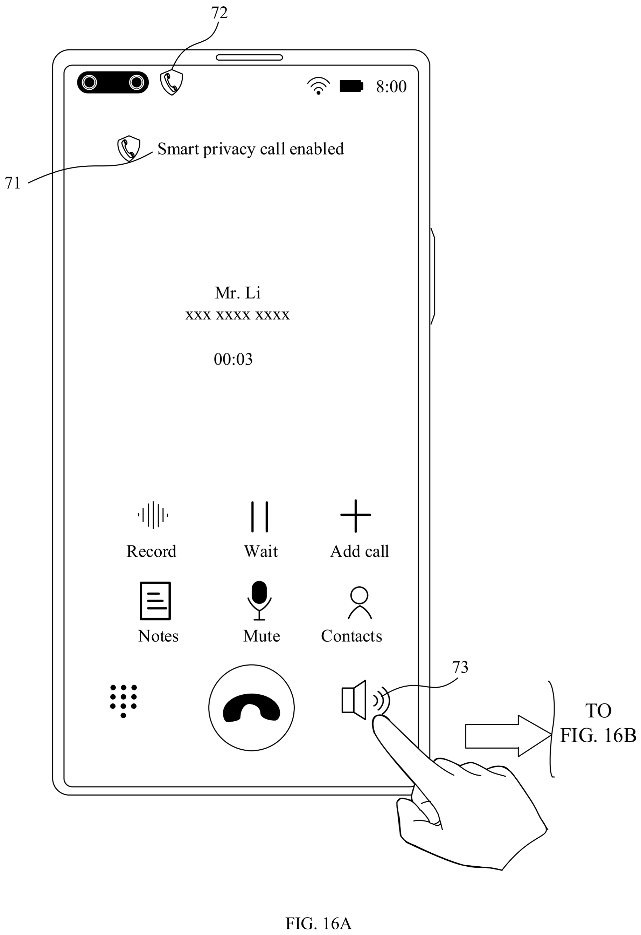

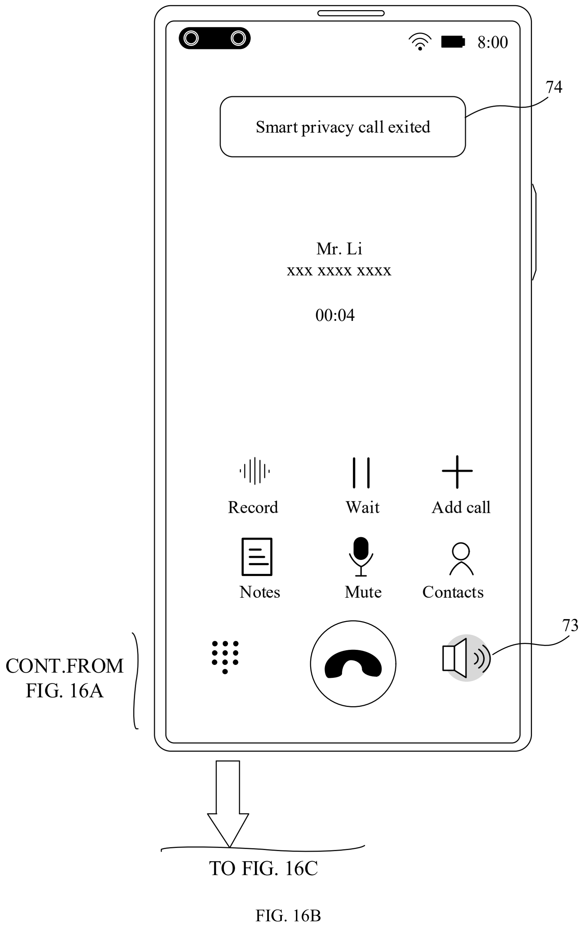

For example, FIG. 16A to FIG. 16D show a schematic diagram of a voice call interface after answering an incoming call. The following prompt information is displayed in the voice call interface: "smart privacy call enabled" 71 and an icon 72 identifying a privacy call. As shown in FIG. 16A, the user taps the loudspeaker button 73 in the voice call interface to trigger the playback of voice through the loudspeaker. As shown in FIG. 16B, in response to the operation of the loudspeaker button 73 performed by the user, the mobile phone turns on a hands-free function. In this case, the voice is played through the loudspeaker, and neither the screen nor the receiver produces sounds, and prompt information indicating that "smart privacy call exited" 74 may be displayed in the voice call interface, and the display of "smart privacy call enabled" 71 and an icon 72 identifying a privacy call is correspondingly canceled. Prompt information indicating that "smart privacy call exited" 74 may be hidden after a preset duration (such as 5 seconds) is displayed.

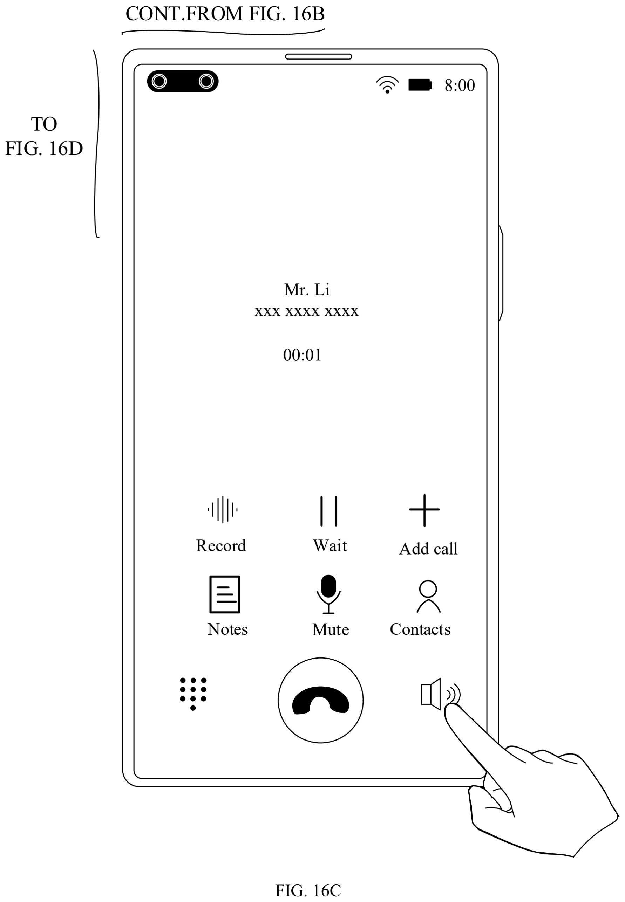

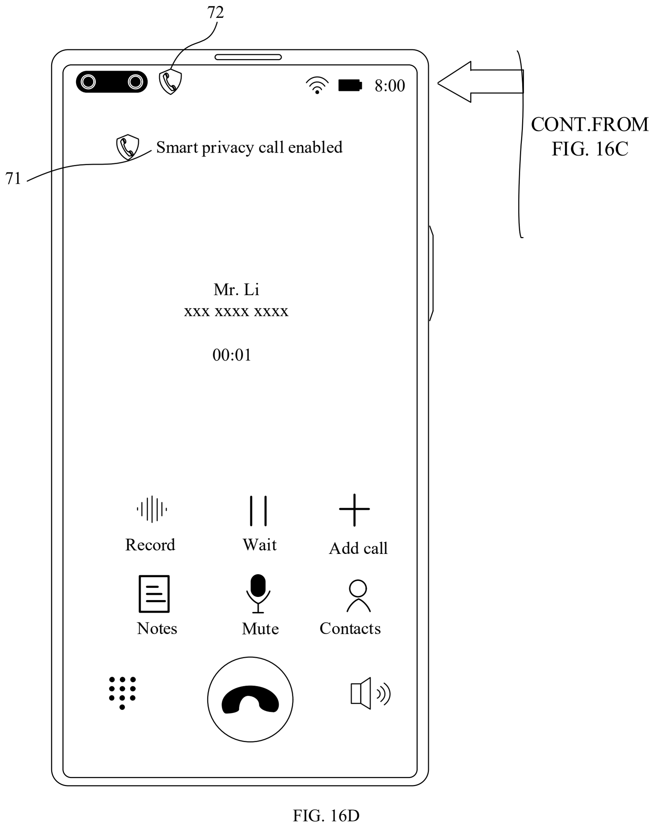

Further, optionally, as shown in FIG. 16C, the user may tap the loudspeaker button 73 in the voice call interface again to trigger the loudspeaker to be turned off. As shown in FIG. 16D, in response to the operation of the loudspeaker button 73 performed by the user, the mobile phone is switched to the private call mode from the loudspeaker mode. In this way, switching between the private call mode and the high volume mode is realized.

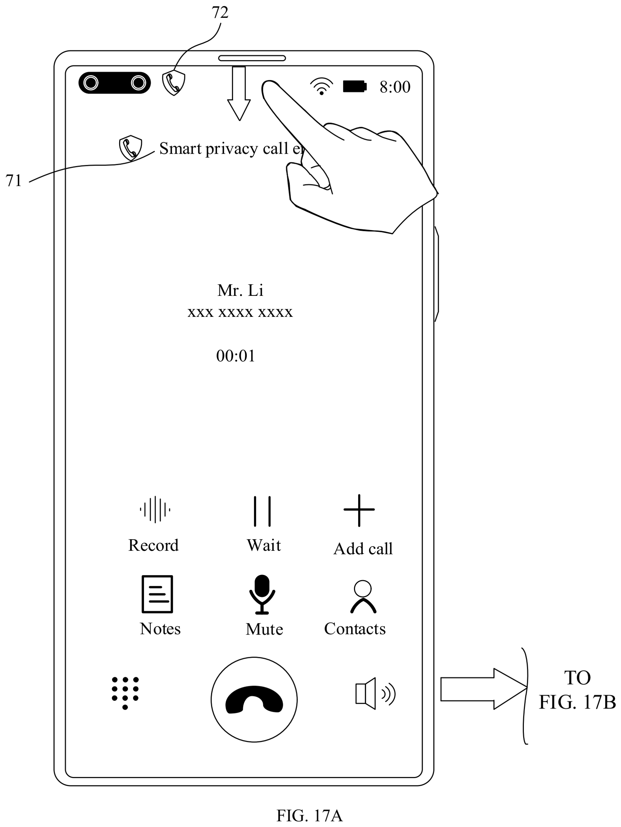

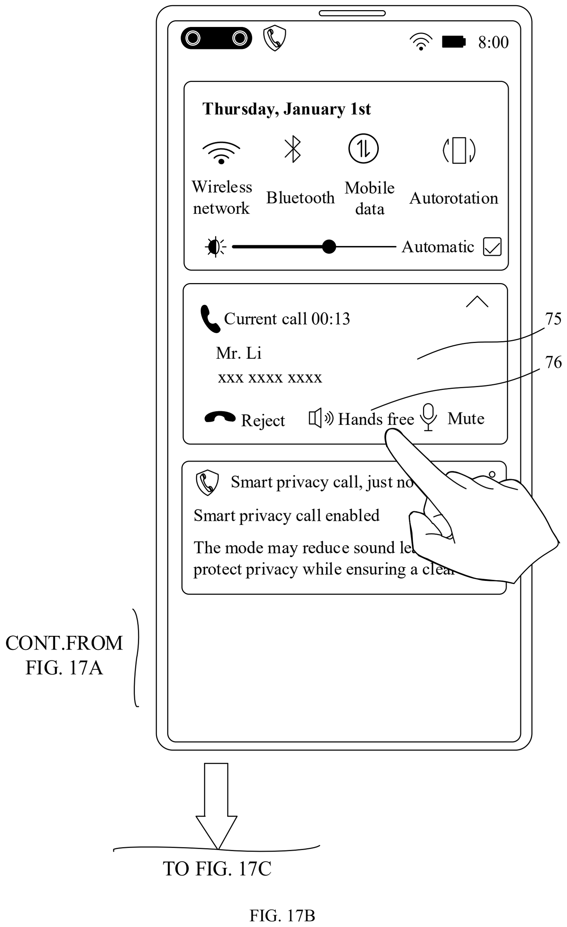

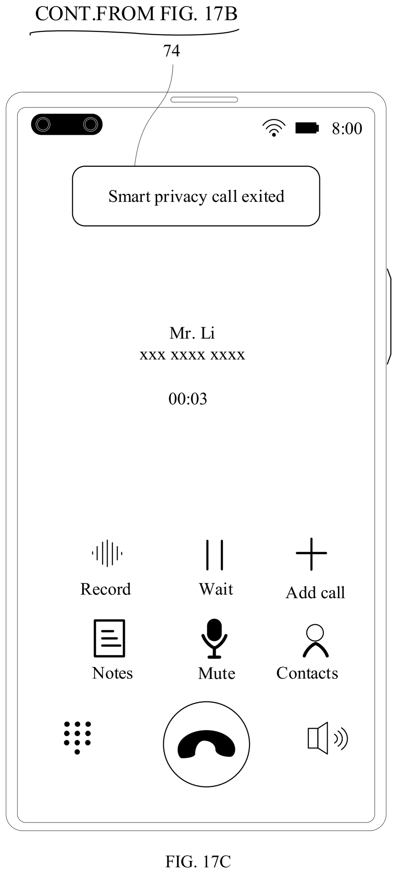

For another example, FIG. 17A to FIG. 17C show a schematic diagram of an interface for triggering switching from a private call mode to a loudspeaker mode by operating on a notification card of a smart privacy call function. As shown in FIG. 17A, the user slides the finger down in a direction of an arrow on the voice call interface to pull down the menu bar. As shown in FIG. 17B, the menu bar (also referred to as the notification interface) is displayed. The menu bar displays a notification card 75. The notification card 75 is configured to indicate that a voice call is in progress, and the user may tap a hands-free logo 76 in the notification card 75 to trigger the hands-free function to be turned on. As shown in FIG. 17C, after the user taps the hands-free logo 76, the voice call interface is returned from a menu bar interface, and the prompt information indicating that "smart privacy call exited" 74 may be displayed in the voice call interface. Correspondingly, the "smart privacy call enabled" 71 and an icon 72 identifying a privacy call may be canceled. In this way, switching between the private call mode and the high volume mode is realized.

In some embodiments, the electronic device provides a setting interface of the smart privacy call function, and the user can trigger the smart privacy call function to be turned on or off in the setting interface based on an actual use requirement.

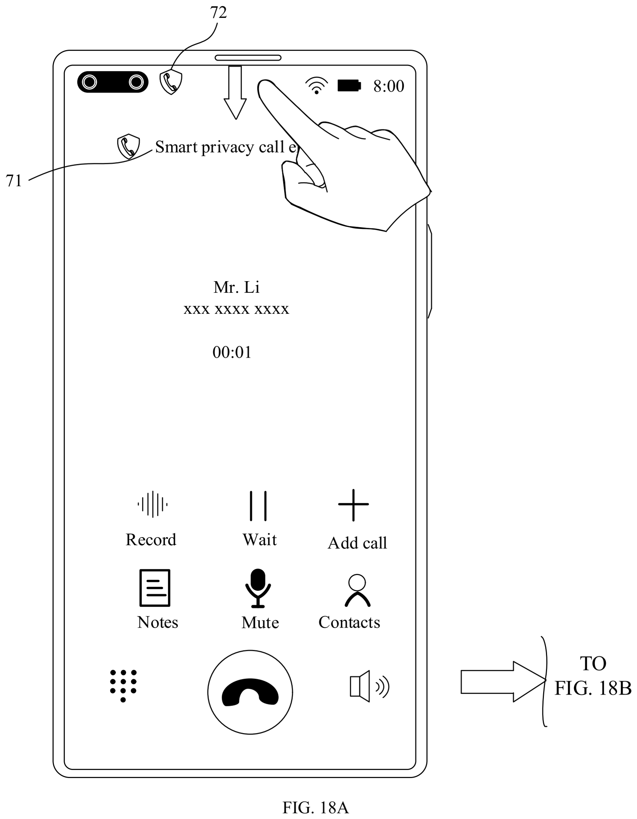

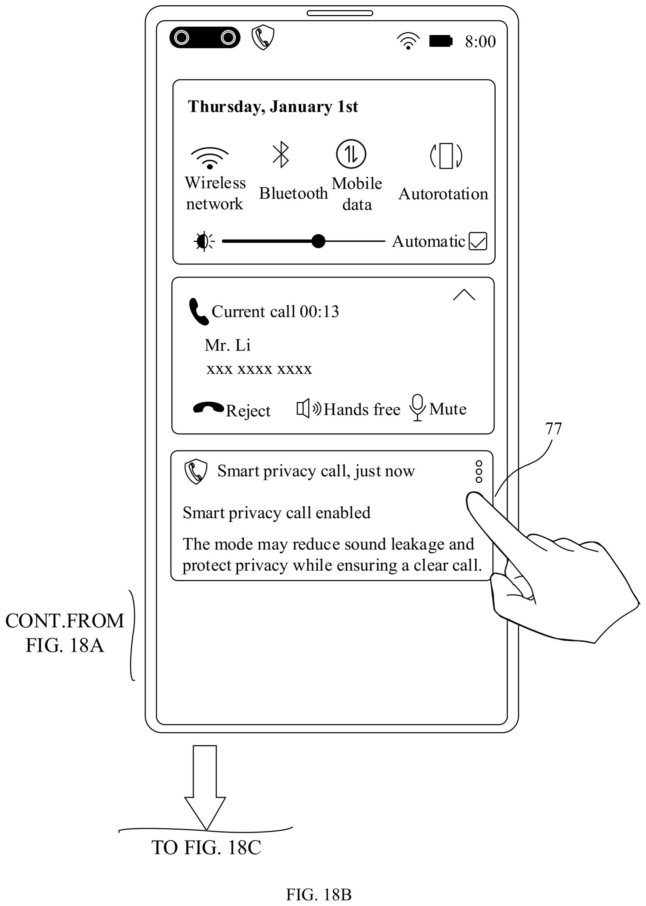

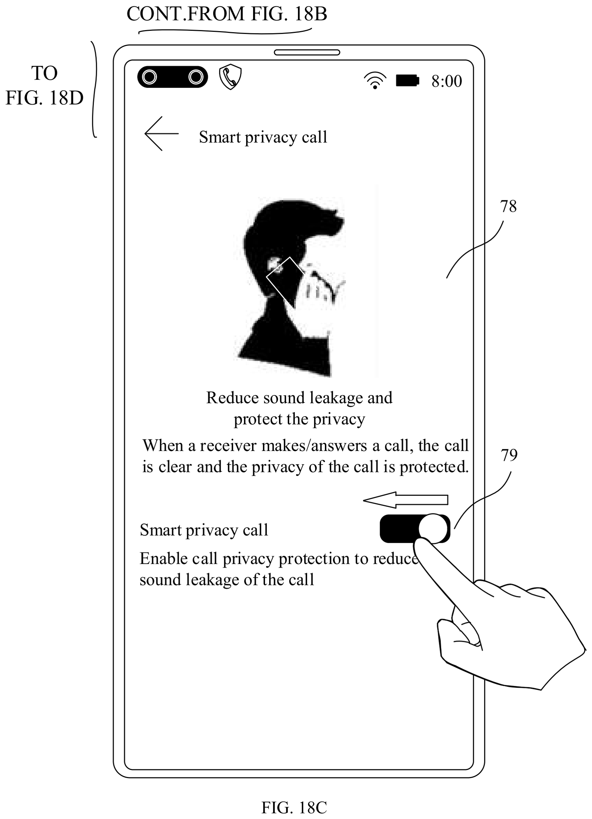

For example, FIG. 18A to FIG. 18D show a schematic diagram of entering a setting interface of a smart privacy call function through a notification card of a smart privacy call function. As shown in FIG. 18A, the user slides the finger down in a direction of an arrow on the voice call interface to pull down the menu bar. As shown in FIG. 18B, the menu bar (also referred to as the notification interface) is displayed. The menu bar displays a notification card 77. The notification card 77 is configured to indicate that the smart privacy call function is turned on, and the user may tap the notification card 77 to set the smart privacy call function. As shown in FIG. 18C, after the user taps the notification card 75, the setting interface 78 of the smart privacy call function is jumped from the menu bar interface. The setting interface 78 includes a switch control 79 of the smart privacy call function, and the switch control 79 currently indicates that the smart privacy call function is turned on. The user may perform operation on the switch control 79 (such as a sliding operation in the direction of the arrow shown) to trigger disabling the smart privacy call function.

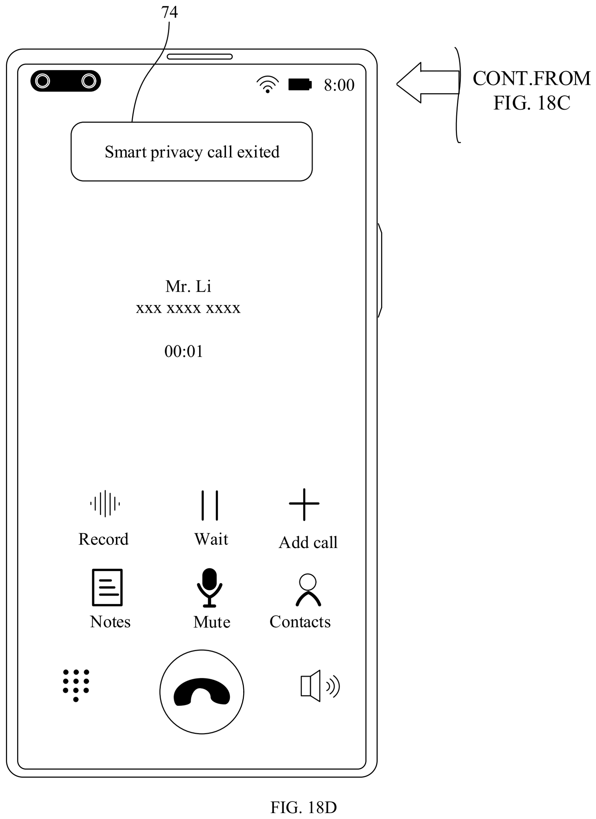

Further, as shown in FIG. 18D, after the user operates the switch control 79, the private call mode is exited, and the voice call interface is jumped from the setting interface 78 of the smart privacy call function, and the prompt information indicating that "smart privacy call exited" 74 may be displayed in the voice call interface. Correspondingly, the "smart privacy call enabled" 71 and an icon 72 identifying a privacy call may be canceled.

It should be noted that the voice call scenario applied in the above embodiment is used as an example for an illustrative description. It may be understood that the solutions provided in the above embodiments on switching between the private call mode and the loudspeaker mode, and the function setting of the private call mode may also be applied to the voice call scenario of VoIP.

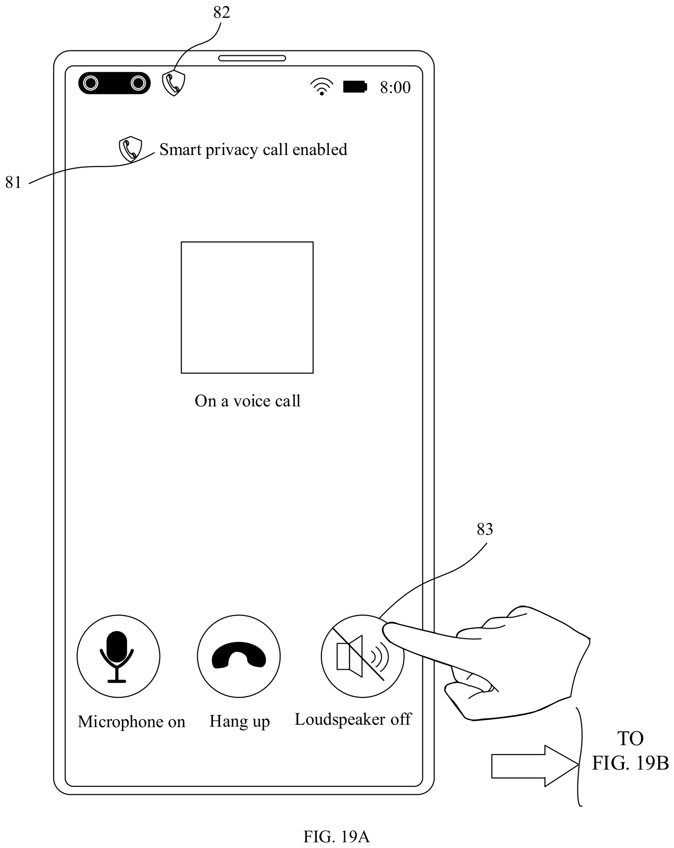

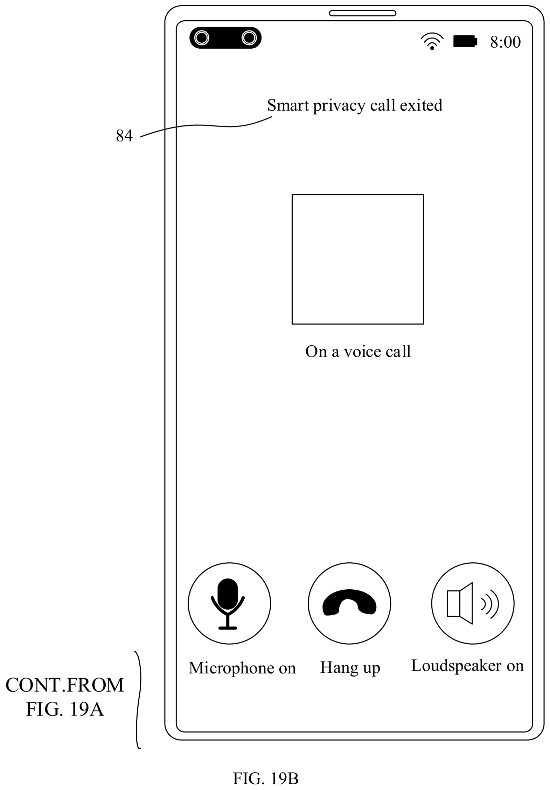

For example, switching between the private call mode and the loudspeaker mode is used as an example. FIG. 19A and FIG 19B show a schematic diagram of a voice call interface for VoIP. The following prompt information is displayed in the voice call interface for the VoIP: "smart privacy call enabled" 81 and an icon 82 identifying a privacy call. As shown in FIG. 19A, the user taps the loudspeaker button 83 in the voice call interface to trigger the playback of voice through the loudspeaker. As shown in FIG. 19B, in response to the operation of the loudspeaker button 83 performed by the user, the mobile phone turns on a hands-free function. In this case, the voice is played through the loudspeaker, and neither the screen nor the receiver produces sounds, and prompt information indicating that "smart privacy call has been exited" 84 may be displayed in the voice call interface, and the display of "smart privacy call enabled" 81 and an icon 82 identifying a privacy call are accordingly canceled.

In this way, when the user performs the on-ear listening by using the electronic device, the electronic device can determine whether to enable the private call mode or the high volume mode based on different volume levels, and can choose to sound through the receiver and/or the screen. For example, when the volume level set by the electronic device by default or the volume level triggered by the user to adjust is less than or equal to the preset volume level, the private call mode is enabled. In the private call mode, the voice may be played at different sound intensity through the receiver and the screen, for example, intensity of sounds produced through the screen is greater than intensity of sounds produced through the receiver. For example, when the volume level set by the electronic device by default or the volume level triggered by the user to adjust is greater than the preset volume level, the high volume mode is enabled. In the high volume mode, the voice can also be played at different sound intensity through the receiver and the screen, for example, intensity of sounds produced through the receiver is greater than intensity of sounds produced through the screen. Through complementary use of sound production through the receiver and the screen, the electronic device can not only avoid sound leakage in a quiet environment, but also have good sound quality during voice playback. Therefore, privacy of the user can be well protected, so that the electronic device has better privacy when the user listens close to an ear.

Based on the above, when the user uses the mobile phone listen close to an ear, or the user selects a receiver mode (that is, a mode in which the mobile phone plays a sound by using a receiver), the mobile phone can determine whether the current volume level is less than or equal to the preset volume level, and determine whether to enable the private call mode or the high volume mode based on the determining result. The following describes a possible implementation of how to detect the operation of performing on-ear listening through the mobile phone performed by the user.

That the user uses the mobile phone listen close to an ear (that is, an on-ear listening state in which the mobile phone is located) may be that the ear of the user is close to the receiver, and listens, by using the receiver of the mobile phone, to audio data (such as record data and song data) stored in the mobile phone; or may be that when the ear of the user is close to the receiver to perform voice communication (voice communication may be voice communication performed with another electronic device by using a phone function in the mobile phone, or may be voice communication performed with another electronic device by using an instant messaging application installed in the mobile phone), the user listens, by using the receiver of the mobile phone, to sound data transmitted from a mobile phone of a peer user and received by the mobile phone; or may be that the ear of the user is close to the receiver to listen to a voice message or the like in an instant messaging application by using the receiver of the mobile phone. For example, the mobile phone receives a voice message from another mobile phone by using the instant messaging application. The mobile phone may display a chat interface of the instant messaging application, and the chat interface includes a voice message from the another mobile phone. In response to an operation of tapping the voice message by the user, the mobile phone may play, by using the receiver, the voice message (that is, a sound signal) from the another mobile phone.

For example, the mobile phone may detect, by using a sensor such as a light sensor or a distance sensor, whether the user's ear is close to the receiver. For example, the mobile phone may detect, by using the distance sensor, whether there is an obstruction in front of a front panel (or a screen) of the mobile phone, and when there is an obstruction at a short distance to the front of the front panel, it may be determined that the user's ear is currently close to the receiver. For another example, when the mobile phone detects, by using the light sensor, that light intensity instantaneously decreases and changes greatly, it may be determined that the user's ear is currently close to the receiver. Certainly, in another embodiment of this application, the mobile phone may alternatively detect, in another manner or by using an algorithm, whether the ear of the user is close to the receiver. Alternatively, reference may be made to related descriptions in the conventional technology. This is not limited herein.

In some embodiments, when the user uses a mobile phone to listen close to an ear, the mobile phone may further display various listening modes for the user to choose, so that the user can manually select the listening mode based on the actual use requirement, and trigger the mobile phone to perform the corresponding sound playback policy of producing sounds through the receiver and the screen. The listening mode may include the privacy mode and the high volume mode.

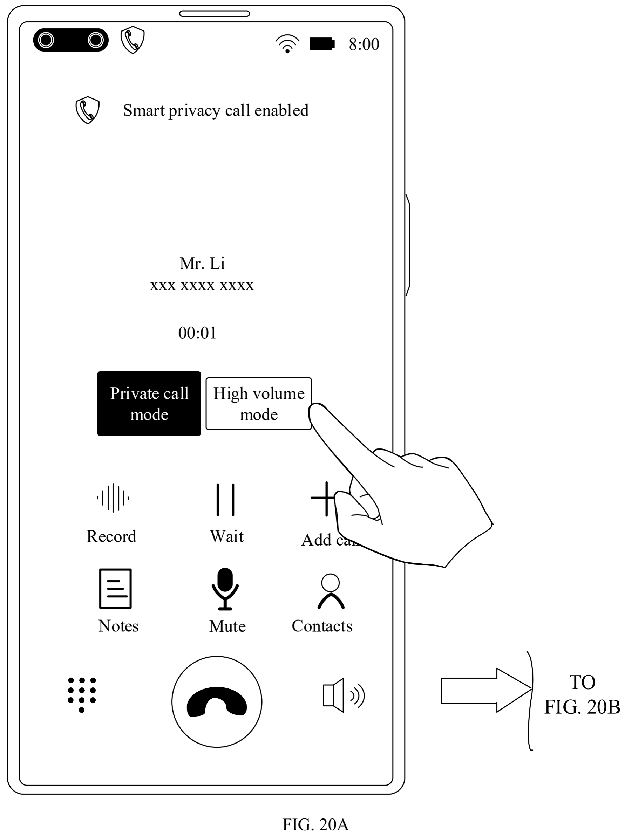

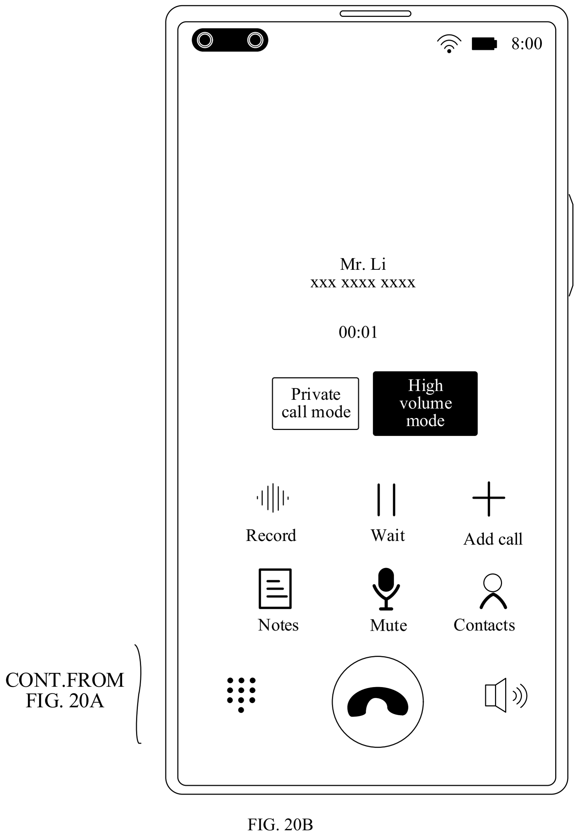

For example, as shown in FIG. 20A, the voice call interface of the mobile phone can display controls such as "private call mode" and "high volume mode" for the user to select the listening mode. For example, as shown in FIG. 20A, when the current listening mode is the private call mode, the control "private call mode" displayed on the voice call interface of the mobile phone has an effect of highlighting. As shown in FIG. 20A and FIG. 20B, in response to the user tapping "high volume mode", the mobile phone can switch the listening mode from the "private call mode" to the "high volume mode". Certainly, the user can also switch the listening mode from the "high volume mode" to the "private call mode" by tapping the "private call mode". Subsequently, the mobile phone can play the sound based on the sound playback policy corresponding to the listening mode selected by the user (for example, sound through the receiver and the screen).

It should be noted that in the above example, after receiving the operation of selecting a listening mode that is inputted by the user, the mobile phone may directly play a sound by using the corresponding sound playback policy to play the sound. Each listening mode uses a corresponding sound playback policy.

The private call mode may play the sound by using the sound playback policy of jointly producing sounds through the receiver and the screen, where intensity of sounds produced through the screen may be greater than or equal to intensity of sounds produced through the receiver. In other words, the mobile phone may use the screen sound production as a main manner and the receiver sound production as an auxiliary manner to simultaneously play voice. The private call mode may alternatively use only the screen to produce sounds.

The high volume mode may play the sound by using the sound playback policy of joint sound production by the receiver and the screen, where intensity of sounds produced through the receiver may be greater than intensity of sounds produced through the screen. In other words, the mobile phone may use the receiver sound production as a main manner and the screen sound production as an auxiliary manner to simultaneously play voice. The high volume mode may further only use the receiver to produce sounds.

Based on various scenarios in which the user listens close to an ear in the foregoing examples, the voice played through sound production through the receiver and the screen may be any piece of audio data stored in the mobile phone. For example, the voice is recorded data or song data stored in the mobile phone, or may be sound data transmitted from a mobile phone of a peer user and received by the mobile phone when the mobile phone performs voice communication, or may be a voice message or the like in an instant messaging application installed in the mobile phone.

Optionally, in this embodiment of this application, in the quiet environment, the mobile phone may further adjust a volume (or referred to as loudness) of sounds produced through the receiver and the screen based on a distance between the human ear and the mobile phone (or the receiver). In addition, a frequency band outputted through receiver sound production and a frequency band outputted through screen sound production may further be adjusted.

For example, when the human ear is away from the mobile phone, the mobile phone may increase the volume of sounds produced through the receiver and the screen. In addition, the mobile phone may further reduce sound production in a high-frequency part in the frequency band outputted through receiver sound production. To be specific, a boundary frequency between the frequency band outputted through screen sound production and the frequency band output through receiver sound production is reduced, so that a lower frequency band is outputted through receiver sound production. Because most of energy generated through screen sound production exactly faces the human ear, and some of energy generated through receiver sound production is released from the sound output hole at the top of the middle frame of the mobile phone, receiver sound production is more prone to sound leakage than screen sound production after the volume is increased. Therefore, the frequency band outputted through receiver sound production is further lowered, so as to prevent another user from clearly hearing sounds outputted through receiver sound production after the volume is increased.

In some embodiments, intensity of sounds produced through the screen may be set based on sensitivity of screen sound production. In other words, specified intensity of sounds produced through the screen may be different based on different sensitivity of screen sound production.

For example, in this embodiment of this application, screen sound production may be implemented by using a screen sound production apparatus (for example, the screen sound production apparatus shown in FIG. 2). The screen sound production apparatus is different based on different screen sound production solutions. For example, the screen sound production apparatus may be a vibration source (which is usually a piezoelectric ceramic, or may be a motor vibrator, an exciter, or another vibration unit) connected to the back of the screen. The piezoelectric ceramic may be controlled to vibrate by using a current signal, to drive the screen to vibrate, so as to implement screen sound production. For another example, the screen sound production apparatus may alternatively be a piezoelectric ceramic that is fastened to the middle frame of the mobile phone by using a cantilever beam structure. The piezoelectric ceramic may be controlled to vibrate by using a current signal, and the vibration is transmitted to the screen by using the middle frame of the mobile phone, to drive the screen to vibrate, so as to implement screen sound production. For another example, the screen sound production apparatus may alternatively be an exciter fastened to the middle frame of the mobile phone. The exciter may be controlled to vibrate by using a current signal, and the vibration is transmitted to the screen by using the middle frame of the mobile phone, to drive the screen to vibrate, so as to implement screen sound production. For another example, the screen sound production apparatus may alternatively be separated magnetic levitation vibrators. One of the vibrators is fastened to the middle frame of the mobile phone, and the other vibrator is fastened to the screen. The vibrator fastened to the screen may be controlled, by using a current signal, to vibrate relative to the vibrator fastened to the middle frame of the mobile phone, so as to push the screen to vibrate to implement screen sound production. Affected by a type and a location set for the screen sound production apparatus, a weight of the middle frame of the mobile phone, an internal structure layout of the mobile phone, and the like, sensitivity of screen sound production in different screen sound production solutions is different. Small sound production intensity and pushing power of screen sound production may be set for screen sound production with high sensitivity, and large sound production intensity and pushing power of screen sound production may be set for screen sound production with low sensitivity.

Optionally, in embodiments of this application, the electronic device (for example, the mobile phone) may automatically enable the function implemented in the foregoing method, or it may be set that a user manually enables the function implemented in the foregoing method.

It should also be noted that, in embodiments of this application, "greater than" may be replaced with "greater than or equal to", and "less than or equal to" may be replaced with "less than"; or "greater than or equal to" may be replaced with "greater than", and "less than" may be replaced with "less than or equal to".

Each embodiment described herein may be an independent solution, or may be combined based on an internal logic, and such solutions all fall within the protection scope of this application.

It may be understood that, the methods and operations implemented by the electronic device in the foregoing method embodiments may also be implemented by a component (for example, a chip or a circuit) that may be applied to the electronic device.

The foregoing describes the method embodiment provided in this application, and the following describes apparatus embodiments provided in this application. It should be understood that the description of the apparatus embodiment corresponds to the description of the method embodiment. Therefore, for content not described in detail, reference is made to the foregoing method embodiment. For brevity, the details are not described herein.

The solutions provided in this embodiment of this application are mainly described above from a perspective of method steps. It may be understood that, to implement the foregoing functions, the electronic device implementing the method includes corresponding hardware structures and/or software modules for performing various functions. A person skilled in the art may aware that, in combination with the units and algorithm steps of the examples described in the embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the protection scope of this application.

In the embodiments, function modules of the electronic device may be divided based on the foregoing method example. For example, each function module may be divided according to each function, or two or more functions may be integrated into one processing module. The integrated module may be implemented in the form of hardware, or may be implemented in a form of a software functional module. It should be noted that module division in this embodiment of this application is an example, and is only logical function division. During actual implementation, there may be another division manner. The following descriptions are made by using an example in which functional modules are divided corresponding to functions.

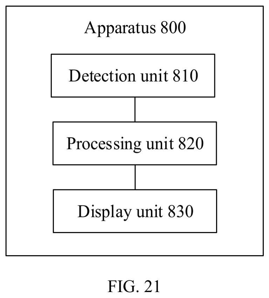

FIG. 21 is a schematic block diagram of an audio processing apparatus 800 according to an embodiment of this application. The apparatus 800 may be configured to perform actions performed by the electronic device in the foregoing method embodiments. The apparatus 800 includes a detection unit 810, a processing unit 820, and a display unit 830.

The detection unit 810 is configured to receive a first operation performed by a user, where the first operation is used for triggering making a call or answering a call.

The processing unit 820 is configured to enter, through the electronic device in response to the first operation, a voice call state, and output voice based on a first output policy corresponding to a private call mode, where the first output policy is to output voice through the screen.

The detection unit 810 is further configured to receive a second operation performed by the user, where the second operation is used for triggering an increase in an output volume of the electronic device.

The processing unit 820 is further configured to switch from the private call mode to a high volume mode in response to the second operation when an adjusted output volume is greater than a preset output volume, and outputting voice based on a second output policy corresponding to the high volume mode, where the second output policy is to output voice through the receiver.

Through the audio processing apparatus provided in this embodiment of this application, when the electronic device enters the voice call state, the private call mode is automatically enabled. For example, the voice may be outputted through the screen sound to avoid a sound leakage, protect call privacy of the user, and improve call experience of the user. When receiving the operation performed by the user to increase the volume, if it is determined that the adjusted volume level is greater than the preset volume level, the high volume mode is enabled. For example, the voice may be outputted through the receiver to ensure a good voice output effect and improve call experience of the user.

In some possible implementations, the first output policy is to output voice through the screen and the receiver, where when the voice is outputted through the screen and the receiver in the private call mode, volume intensity of sounds produced through the screen is greater than or equal to volume intensity of sounds produced through the receiver.

Through the above solution, in the private call mode, sound production may be simultaneously performed through a screen and a receiver, and the two sound production manners may be controlled to produce sounds at different volume intensity, for example, intensity of sounds produced through the screen is greater than or equal to intensity of sounds produced through the receiver, to avoid sound leakage, protect call privacy of the user, and improve call experience of the user.

In some possible implementations, the second output policy is to output voice through the receiver and the screen. When voice is outputted through the screen and the receiver in the private call mode, volume intensity of sounds produced through the screen is greater than or equal to volume intensity of sounds produced through the receiver.

Through the above solution, in the high volume mode, sound production may be simultaneously performed through the screen and the receiver, and the two sound production manners may be controlled to produce sounds at different volume intensity, for example, intensity of sounds produced through the receiver is greater than intensity of sounds produced through the screen, to ensure a good voice output effect and improve call experience of the user.

In some possible implementations, total output volume intensity in the private call mode is equal to total output volume intensity in the high volume mode.

In some possible implementations, the processing unit 820 is further configured to increase the total output volume intensity of the electronic device when the private call mode is switched to the high volume mode.

In some possible implementations, the detection unit 810 is further configured to receive a third operation performed by the user, where the third operation is used for triggering a decrease in an output volume of the electronic device.

The processing unit 820 is further configured to switch from the high volume mode to the private call mode in response to the third operation when an adjusted output volume is less than or equal to the preset output volume, and output the voice based on the first output policy corresponding to the private call mode.

Through the above solution, when receiving an operation performed by a user to lower a volume, if it is determined that an adjusted volume level is less than or equal to a preset volume level, a private call mode is enabled, to avoid a sound leakage, protect call privacy of the user, and improve call experience of the user.

In some possible implementations, the outputting voice based on a first output policy corresponding to a private call mode includes:
outputting voice based on the first output policy corresponding to the private call mode when the electronic device enables a smart privacy call function.

In some possible implementations, the output volume of the electronic device is represented by a volume level, and a preset volume is represented by using a preset volume level; or the output volume of the electronic device is represented by using a volume decibel value, and a preset volume is represented by using a preset volume decibel value.

In some possible implementations, an output volume range of the electronic device includes a preset volume decibel value range, the preset volume decibel value range is divided into N levels, and N volume levels are in a one-to-one correspondence with N decibel values in the preset volume decibel value range.

In some possible implementations, the N volume levels include a volume level 1 to a volume level 10, where the private call mode corresponds to the volume level 1 to a volume level I, and the high volume mode corresponds to a volume level I+1 to the volume level 10, I being an integer greater than 1 and less than 10.

In some possible implementations, the preset volume decibel value range is [2.5 dB, 25 dB].

In some possible implementations, when a value of I is 6, the preset volume level is a volume level 6, and a volume decibel value corresponding to the volume level 6 is 15 dB.

In some possible implementations, as shown in FIG. 21, the apparatus 800 may further include a display unit 830.

The display unit 830 is configured to display first prompt information and/or second prompt information in a first region of a voice call interface after the smart privacy call function is enabled. The first prompt information is used for prompting that the private call function is enabled, and the first prompt information is used for guiding the user to approach the first region to answer a call.

The first region is a region of the screen closest to the screen sound production apparatus.

In some possible implementations, the displaying first prompt information and/or second prompt information in a first region of a voice call interface includes: alternately displaying the first prompt information and the second prompt information in the first region of the voice call interface.

In some possible implementations, the display unit 830 is further configured to cancel the display of the first prompt information and the second prompt information when the private call mode is switched to the high volume mode.

In some possible implementations, the display unit 830 is further configured to display third prompt information in a voice call interface of first M voice calls after the smart privacy call function is enabled, where the third prompt information is used for representing an effect after the smart privacy call function is enabled; and cancel the display of the third prompt information in a voice call interface of a subsequent voice call.

In some possible implementations, the display unit 830 is further configured to display an icon for identifying the private call mode in a status bar of the electronic device when voice is outputted based on the first output policy corresponding to the private call mode.

In some possible implementations, the display unit 830 is further configured to cancel the display of the icon for identifying the private call mode in the status bar of the electronic device when the private call mode is switched to the high volume mode.

In some possible implementations, the detection unit 810 is further configured to receive a fourth operation performed by the user on a physical volume button of the electronic device.

The display unit 830 is further configured to display a volume bar icon and a call mode icon in the voice call interface in response to the fourth operation.

The volume bar icon is used for representing an output volume during a voice call, and the call mode icon is used for representing that a current call mode is the private call mode or the high volume mode.

In some possible implementations, when the smart privacy call function is enabled, the call mode icon is an icon used for representing the private call mode; or when the smart privacy call function is disabled, the call mode icon is an icon used for representing the high volume mode.

In some possible implementations, the electronic device may further include a loudspeaker, and the detection unit 810 is further configured to receive, when the smart privacy call function is enabled, a fifth operation performed by the user on a loudspeaker control in the voice call interface.

The processing unit 820 is further configured to output voice through the loudspeaker and stopping sound production of the receiver and sound production of the screen in response to the fifth operation.

In some possible implementations, the processing unit 820 is further configured to display a system setting interface when the detection unit 810 receives an operation performed by the user on a system setting icon, where the system setting interface includes a private call setting item.

The display unit 830 is further configured to: display a setting interface of the smart privacy call function when the detection unit 810 receives an operation performed by the user on the private call setting item, where the setting interface displays an enable control and a disable control of the smart privacy call function; and
enable the smart privacy call function when receiving an operation performed by the user on the enable control; or disable the smart privacy call function when receiving an operation performed by the user on the disable control.

In some possible implementations, the detection unit 810 is further configured to receive, when a smart privacy call function is enabled, a sixth operation performed by the user on a voice call interface.

The display unit 830 is further configured to jump from the voice call interface to a card notification interface in response to the sixth operation, where a first notification card is displayed in the card notification interface, and the first notification card is used for prompting that the smart privacy call function is enabled.

In some possible implementations, the display unit 830 is further configured to jump from the notification interface to a setting interface of the smart privacy call function when the detection unit 810 receives an operation performed by the user on the first notification card.

In some possible implementations, the apparatus 800 is applicable to a call scenario of voice over Internet protocol.

The apparatus 800 according to this embodiment of this application may correspondingly perform the method described in embodiments of this application. In addition, the foregoing and other operations and/or functions of the units in the apparatus 800 are respectively configured to implement corresponding procedures of the method. For brevity, details are not described herein again.

Optionally, in some embodiments, this application provides a chip. The chip is coupled with a memory the chip is configured to read and execute computer programs or instructions stored in the memory, so as to execute the methods in the foregoing embodiments.

Optionally, in some embodiments, this application provides an electronic device. The electronic device includes a chip. The chip is configured to read and execute a computer program or instructions stored in a memory, to enable the method in each of the embodiments to be performed.

Optionally, in some embodiments, this embodiment of this application further provides a computer-readable storage medium. The computer-readable storage medium stores program code. When the computer program code is run on a computer, the computer is enabled to perform the method in each of the foregoing embodiments.

Optionally, in some embodiments, this embodiment of this application further provides a computer program product. The computer program product includes computer program code. When the computer program code is run on a computer, the computer is enabled to perform the method in each of the foregoing embodiments.

A specific structure of an execution entity of the method provided in embodiments of this application is not specifically limited in embodiments of this application, as long as the program in which the codes of the methods provided in embodiments of this application are recorded may be executed to process based on embodiments of this application. For example, the method provided in embodiments of this application may be performed by the electronic device, or may be performed by a functional module that is in the electronic device and that can invoke and execute a program.

A person of ordinary skill in the art may be aware that, with reference to the examples described in embodiments disclosed in this specification, units and steps may be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the protection scope of this application.

A person skilled in the art can clearly understand that for convenience and conciseness of description, for specific working processes of the foregoing systems, devices and units, reference may be made to the corresponding processes in the foregoing method embodiments, and details are not described herein again.

Unless otherwise defined, meanings of all technical and scientific terms used in this specification are the same as those usually understood by a person skilled in the art to which this application belongs. In this application, terms used in the specification of this application are merely intended to describe objectives of the specific embodiments, but are not intended to limit this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A volume adjustment prompt method, applied to an electronic device, and the method comprises:
receiving a first operation performed by a user, wherein the first operation is used for triggering making a call or answering a call;
entering, by the electronic device in response to the first operation, a voice call state, displaying a voice call interface, and outputting voice based on a first volume, wherein when the first volume is less than or equal to a preset volume level, and prompt information is displayed on the voice call interface to prompt protection of call privacy of the user;
displaying a volume bar in the voice call interface after receiving an operation on a volume button by the user;
receiving a second operation performed by the user; and
in response to the second operation, adjusting a volume of the outputted voice to a second volume, and increasing a filling length of the volume bar, wherein when the second volume is greater than the preset volume level, the electronic device cancels the display of the prompt information.

2. The method according to claim 1, wherein the method is applied in a process of switching between a private call mode in a receiver mode and a high volume mode in the receiver mode, the electronic device determines whether to enable the private call mode or the high volume mode based on different volume levels, and chooses to sound through the receiver and/or the screen.

3. The method according to claim 2, wherein the prompt information is further used to indicate that the private call mode has been enabled.

4. The method according to any of claims 2 or 3, wherein when the second volume is greater than the preset volume level, the voice call state is switched from the private call mode to the high volume mode.

5. The method according to any one of claims 1 to 4, wherein the method further comprises:
receiving a third operation performed by the user when the electronic device is outputting voice based on the second volume; and
in response to the third operation, lowering the volume of the outputted voice to less than or equal to the preset volume level, reducing the filling length of the volume bar, and displaying the prompt information.

6. The method according to any one of claims 2 to 5, wherein the voice call interface comprises a loudspeaker icon, and the method further comprises:
receiving, when the private call mode is enabled, a fifth operation performed by the user on the loudspeaker icon; and
in response to the fifth operation, disabling the privacy call mode, canceling the display of the prompt information and enabling a loudspeaker mode;
outputting voice through a loudspeaker after the electronic device enables the loudspeaker mode; and
switching from the loudspeaker mode to the private call mode and displaying the prompt information when the electronic device receives the operation of tapping the loudspeaker button again by the user.

7. The method according to claim 1, wherein the second volume is a maximum volume.

8. The method according to any one of claims 1 to 7, wherein a volume level corresponding to the first volume is any level from level 1 to level 6.

9. The method according to any one of claims 1 to 8, wherein a volume level corresponding to the second volume is level 9.

10. The method according to any one of claims 1 to 9, wherein the method is applicable to a call scenario of an IP-based voice call.

11. The method according to any one of claims 1 to 10, wherein the prompt information comprises a first icon displayed in a status bar.

12. The method according to any one of claims 1 to 11, wherein the prompt information comprises text prompt information and a second icon located in a first region of the voice call interface.

13. The method according to claim 5, wherein the second operation and the third operation are operations performed by the user on a physical volume button of the electronic device, the second operation is an operation of turning **up** a volume, and the third operation is an operation of turning down the volume; or
the second operation and the third operation are sliding operations performed by the user on the voice call interface, wherein sliding directions of the second operation and the third operation are opposite.

14. An electronic device, comprising a processor, wherein the processor is coupled to a memory, and the processor is configured to execute a computer program or instructions stored in the memory, so that the electronic device implements the method according to any one of claims 1 to 13.

15. A computer-readable storage medium, storing a computer program, wherein the computer program, when run on an electronic device, causes the electronic device to perform the method according to any one of claims 1 to 13.
